# EUROPEAN PATENT APPLICATION

(11) **EP 3 866 081 A1**
(43) Date of publication of application: **18.08.2021**
(21) Application number: 19871636.7
(22) Date of filing: 26.09.2019
(51) Int. Cl.: G06Q 10/06, G06F 3/16, G06Q 50/10

(54) **INFORMATION PROCESSING DEVICE, INFORMATION PROCESSING SYSTEM, INFORMATION PROCESSING METHOD, AND PROGRAM**

(30) Priority: 12.10.2018 JP 2018193118
(71) Applicant: Sony Group Corporation, Tokyo 108-0075 (JP)
(72) Inventor: SUZUKI, Hirotaka, Tokyo 108-0075 (JP); OGAWA, Hiroaki, Tokyo 108-0075 (JP); CINCAREK, Tobias, Tokyo 108-0075 (JP); OCHIAI, Kazuki, Tokyo 108-0075 (JP); TOTSUKA, Noriko, Tokyo 108-0075 (JP); WATANABE, Kanako, Tokyo 108-0075 (JP); YAMAMOTO, Shohei, Tokyo 108-0075 (JP)
(74) Representative: D Young & Co LLP
(86) International application number: PCT/JP2019/037880
(87) International publication number: WO 2020/075516

(57) **Abstract**

A configuration that verifies correspondence between a cooking foodstuff and a cooking utensil and determines whether or not there is a hygiene problem in the cooking utensil to execute a warning output, replacement control of the cooking utensil, or the like, is realized. A suitability determination unit that verifies the correspondence between the foodstuff to be cooked and the cooking utensil to be used for cooking and determines whether or not the cooking utensil has a hygienic problem is included. In a case where the suitability determination unit determines that the cooking utensil has a hygiene problem, the suitability determination unit executes a warning output or control of causing stop of using the cooking utensil. The suitability determination unit outputs a warning by display information or voice information to a user who is a cooking performer. Alternatively, control information for causing replacement or cleaning of the cooking utensil to be performed is output to a cooking robot which is a cooking performer.

## Description

### TECHNICAL FIELD

The present disclosure relates to an information processing apparatus, an information processing system, and an information processing method, and a program. More specifically, the present disclosure relates to, when cooking using various cooking utensils, an information processing apparatus, an information processing system, and an information processing method, and a program that cause a user or a robot to perform processing such as selection, replacement, sanitization, or the like of cooking utensils and realize hygienic cooking.

### BACKGROUND ART

Recently, the use of data servers that provide recipe information regarding various dishes is increasing. A user can acquire a recipe from the recipe information providing server and do various cooking.

As a conventional technology that discloses processing using recipe information, for example, Patent Document 1 (Japanese Patent Application Laid-Open No. 2009-54042) is available. This Patent Document 1 discloses a configuration that proposes a cooking process considering not only recipe information but also cooking utensils that can be used by a user and the like.

The apparatus described in Patent Document 1, by referring to a cooking appliance database that registers a cooking appliance and cooking utensil information and a user profile database that registers the number of cooking appliances owned by a user and the like, on the basis of the recipe information, selects a cooking method that can be used by the user and presents the cooking method to the user.

However, in a case where performing cooking using various foodstuffs, if reusing a kitchen knife and cutting board, bacteria of meat, fish, and the like may adhere to vegetables such as salads for raw consumption and the like in some cases. There is a risk of food poisoning if eating the dish that is completed by such cooking.

There are many services that provide recipe information, but since notification of information regarding hygiene-friendly selection, replacement, sanitization, and the like of the utensil is not sufficiently provided to users, there is a risk that hygiene problems may occur frequently from now on.

### CITATION LIST

### PATENT DOCUMENT

Patent Document 1: Japanese Patent Application Laid-Open No. 2009-54042

### SUMMARY OF THE INVENTION

### PROBLEMS TO BE SOLVED BY THE INVENTION

The present disclosure, for example, has been made in view of the problems described above, and an object of the present disclosure is to provide an information processing apparatus, an information processing system, and an information processing method, and a program that enable the use of cooking utensils ensuring hygiene.

In one embodiment of the present disclosure, an object of the present disclosure is, when a person or a robot performs cooking using various cooking utensils, to provide an information processing apparatus, an information processing system, and an information processing method, and a program that monitor the cooking utensils to be used and realize hygienic cooking by causing the user or the robot to perform processing such as selection, replacement, sanitization, or the like of the cooking utensils.

### SOLUTIONS TO PROBLEMS

The first aspect of this disclosure is an information processing apparatus including
a suitability determination unit that verifies correspondence between a foodstuff to be cooked and a cooking utensil to be used for cooking and determines whether or not the cooking utensil has a hygiene problem, in which
the suitability determination unit, in a case where determining that the cooking utensil has the hygiene problem, executes a warning output or control of causing stop of using the cooking utensil.

Further, the second aspect of this disclosure is an information processing system including
a cooking robot that performs cooking, and
a cooking monitoring apparatus that monitors cooking performed by the cooking robot, in which
the cooking monitoring apparatus includes
a suitability determination unit that verifies correspondence between a foodstuff to be cooked by the cooking robot and a cooking utensil to be used for cooking and determines whether or not the cooking utensil has a hygiene problem, and
the suitability determination unit, in a case where determining that the cooking utensil has the hygiene problem, outputs control information to cause stop of using the cooking utensil to the cooking robot.

Further, the third aspect of this disclosure is an information processing method executed in an information processing apparatus, in which
a suitability determination unit executes a suitability determination process of verifying correspondence between a foodstuff to be cooked and a cooking utensil to be used for cooking and determining whether or not the cooking utensil has a hygiene problem, and
the suitability determination unit, in a case where determining that the cooking utensil has the hygiene problem, executes a warning output or control of causing stop of using the cooking utensil.

Further, the fourth aspect of this disclosure is an information processing method executed in an information processing system, the information processing system including
a cooking robot that performs cooking, and
a cooking monitoring apparatus that monitors cooking performed by the cooking robot, in which
the cooking monitoring apparatus executes a suitability determination process of verifying correspondence between a foodstuff to be cooked by the cooking robot and a cooking utensil to be used for cooking and determines whether or not the cooking utensil has a hygiene problem, and
in the suitability determination process, in a case where determining that the cooking utensil has the hygiene problem, control information to cause stop of using the cooking utensil is output to the cooking robot.

Further, the fifth aspect of this disclosure is a program that causes an information processing apparatus to execute information processing, in which
the program causes a suitability determination unit to execute a suitability determination process of verifying correspondence between a foodstuff to be cooked and a cooking utensil to be used for cooking and determining whether or not the cooking utensil has a hygiene problem, and
in the suitability determination process, in a case where determining that the cooking utensil has the hygiene problem, the program causes output of warning or output of control information to cause stop of using the cooking utensil to be executed.

Note that the program of the present disclosure is, for example, a program that can be provided by a storage medium or a communication medium that provides the program in a computer-readable format to an information processing apparatus or a computer system that can execute various program codes. By providing such a program in a computer-readable format, processing according to the program is realized on the information processing apparatus or the computer system.

Further other objects, features, and advantages of the present disclosure will be apparent from a more detailed description based on the embodiments of the present disclosure described later and the accompanying drawings. Note that, in the present specification, the system is a logical set configuration of a plurality of apparatuses, and it is not limited that apparatuses with each configuration are in the same housing.

### EFFECTS OF THE INVENTION

According to the configuration of one embodiment of the present disclosure, it is possible to realize a configuration that verifies correspondence between a cooking foodstuff and a cooking utensil and determines whether or not there is a hygiene problem in the cooking utensil to perform a warning output, replacement control of the cooking utensil, or the like.

Specifically, for example, a suitability determination unit that verifies the correspondence between the foodstuff to be cooked and the cooking utensil to be used for cooking and determines whether or not the cooking utensil has a hygienic problem is included. In a case where the suitability determination unit determines that the cooking utensil has a hygiene problem, the suitability determination unit executes a warning output or control of causing stop of using the cooking utensil. The suitability determination unit outputs a warning by display information or voice information to a user who is a cooking performer. Alternatively, control information for causing replacement or cleaning of the cooking utensil to be performed is output to a cooking robot which is a cooking performer.

By the present configuration, it is possible to realize a configuration that verifies correspondence between a cooking foodstuff and a cooking utensil and determines whether or not there is a hygiene problem in the cooking utensil to execute a warning output, replacement control of the cooking utensil, or the like

Note that the effects described in the present specification are merely exemplary and not limited, and may have additional effects.

### BRIEF DESCRIPTION OF DRAWINGS

Fig. 1 is a diagram illustrating an example of processing executed by a cooking monitoring apparatus of the present disclosure.
Fig. 2 is a diagram illustrating a configuration example of the cooking monitoring apparatus of the present disclosure.
Fig. 3 is a diagram illustrating a configuration example of a cooking utensil.
Fig. 4 is a diagram illustrating an example of foodstuff and cooking utensil matching data.
Fig. 5 is a diagram illustrating an example of cooking utensil condition information.
Fig. 6 is a diagram illustrating an example of cooking utensil condition information.
Fig. 7 is a diagram illustrating an example of an alert output by the cooking monitoring apparatus of the present disclosure.
Fig. 8 is a diagram illustrating a flowchart explaining a sequence of processing executed by the cooking monitoring apparatus of the present disclosure.
Fig. 9 is a diagram illustrating an example of processing executed by the cooking monitoring apparatus of the present disclosure.
Fig. 10 is a diagram illustrating a configuration example of the cooking monitoring apparatus of the present disclosure.
Fig. 11 is a diagram illustrating a flowchart explaining a sequence of processing executed by the cooking monitoring apparatus of the present disclosure.
Fig. 12 is a diagram illustrating an example of a cooking utensil.
Fig. 13 is a diagram illustrating an example of sanitization and cleaning of a cooking utensil.
Fig. 14 is a diagram illustrating an example of sanitization and cleaning of a cooking utensil.
Fig. 15 is a diagram illustrating an example of sanitization and cleaning of a cooking utensil.
Fig. 16 is a diagram illustrating an example of sanitization and cleaning of a cooking utensil.
Fig. 17 is a diagram illustrating an example of sanitization and cleaning of a cooking utensil.
Fig. 18 is a diagram illustrating a hardware configuration example of an information processing apparatus corresponding to the cooking monitoring apparatus of the present disclosure.

### MODE FOR CARRYING OUT THE INVENTION

Hereinafter, details of an information processing apparatus, an information processing system, and an information processing method, and a program of the present disclosure will be described with reference to the drawings. Note that the description will be given according to the following items.
1. Regarding a configuration and processing of the cooking monitoring apparatus in a configuration in which a person performs cooking
2. Regarding a sequence of processing executed by the cooking monitoring apparatus in the configuration in which a person performs cooking
3. Regarding a configuration and processing of the cooking monitoring apparatus in a configuration in which a cooking robot performs cooking
4. Regarding a sequence of processing executed by the cooking monitoring apparatus in the configuration in which the cooking robot performs cooking
5. Regarding a configuration example for performing replacement, sanitization, and cleaning of a cooking utensil
6. Regarding a hardware configuration example of information processing apparatus
7. Summary of configurations of the present disclosure

### [1. Regarding a configuration and processing of the cooking monitoring apparatus in a configuration that a person performs cooking]

An information processing apparatus (a cooking monitoring apparatus) of the present disclosure can be used in the following two configurations.
(Configuration example 1) A configuration in which a person performs cooking
(Configuration example 2) A configuration in which a cooking robot performs cooking

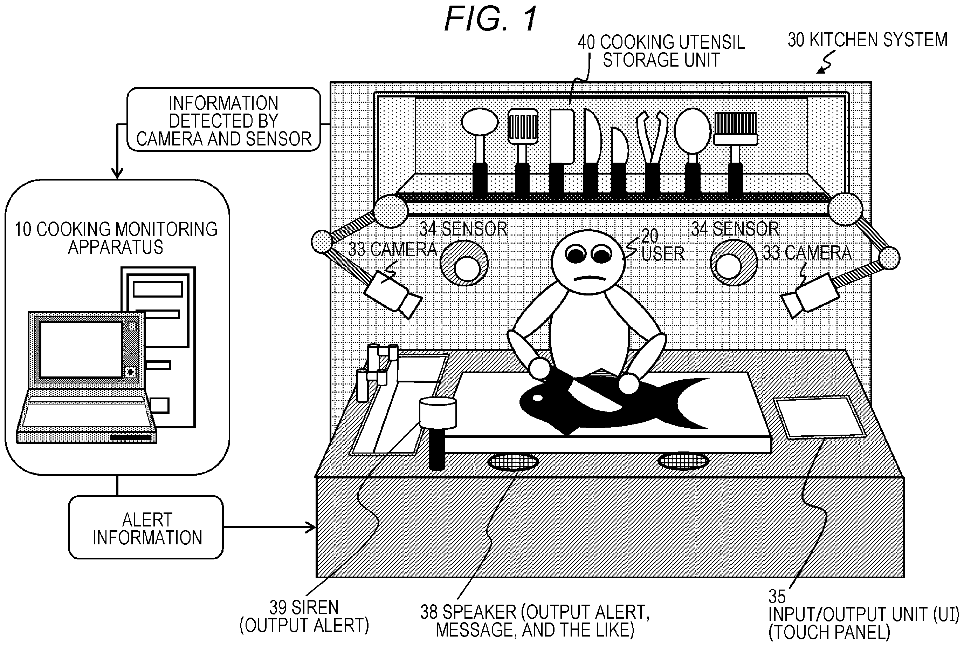

Each of these configuration examples will be described sequentially. First, the configuration and processing of the cooking monitoring apparatus in the configuration in which a person performs cooking will be described with reference to Fig. 1 and below.

Fig. 1 illustrates a cooking monitoring apparatus 10 that is an information processing apparatus of the present disclosure and a kitchen system 30.

In the kitchen system 30, a user (a person) 20 performs cooking.

In a case where detecting a possibility for the user (the person) 20 to use a cooking utensil having a hygienic problem, the cooking monitoring apparatus 10 outputs an alert (a warning) to cause the use of dangerous cooking utensil to be avoided and to cause replacement or sanitization of the cooking utensil to be performed. This processing enables cooking ensuring hygiene.

The kitchen system 30 is provided with a cooking utensil storage unit 40, and various cooking utensils are stored. For example, various cooking utensils such as meat knives, vegetable knives, small knives, bowls, cutting boards for meat, cutting boards for vegetables, and the like are stored.

The user 20 can freely select the utensil to be used from these cooking utensils.

A camera 33 is provided in the kitchen system 30 to capture an image of a state of cooking on a counter. The captured image is input to the cooking monitoring apparatus 10. Also, for example, various sensors 34 such as a temperature sensor, a humidity sensor, an odor sensor, a brightness sensor, a voice sensor (a microphone), and the like are provided, and information from these sensors is also input to the cooking monitoring apparatus 10.

Also, the kitchen system 30 is provided with, for example, a touch panel type input/output unit (UI) 35, and the user 20 can input various information to the cooking monitoring apparatus 10 via the input/output unit (UI) 35.

The cooking monitoring apparatus 10 analyzes information regarding foodstuff to be cooked by the user 20 and information regarding cooking utensil to be used from information detected by the camera 33 and the sensor 34, information input by the user via the input/output unit (UI) 35, and the like and determines whether or not a combination of the foodstuff and the cooking utensil is a suitable combination, that is, whether or not the foodstuff and the cooking utensil match, and in a case where it is determined that the combination of the foodstuff and the cooking utensil is not a suitable combination, an alert (a warning) is output.

The alert (the warning) is output using the input/output unit (UI) 35, a speaker 38, a siren 39, and the like of the kitchen system 30 illustrated in the drawings.

The user 20 notices that the combination of the foodstuff and the cooking utensil is not a suitable combination according to the alert output and performs processing such as replacement, sanitization, washing with water, or the like of the cooking utensils. This processing prevents unsanitary cooking, for example, such as cutting vegetables for a raw vegetable salad with a kitchen knife used for cutting raw meat, and it is possible to perform hygienic cooking.

Note that,.one of the important processes of the cooking monitoring apparatus 10 is a process of determining whether or not the combination of the cooking foodstuff and the cooking utensil of the user 20 is a suitable combination, that is, whether or not the cooking foodstuff and the cooking utensil match.

Specifically, in a case where trying to cut vegetables without performing sanitization, washing with water, or the like after cutting meat with a meat knife, it is determined that the combination of the cooking foodstuff and the cooking utensil is not a suitable combination, that is, the cooking foodstuff and the cooking utensil do not match, and an alert is output.

The cooking monitoring apparatus 10 has a database in which data regarding a suitable combination of cooking foodstuffs and cooking utensils, that is, matching data is registered and determines whether or not the combination of the cooking foodstuff and the cooking utensil of the user 20 is suitable with reference to this database.

A specific example of this matching data and details of a usage process will be described later.

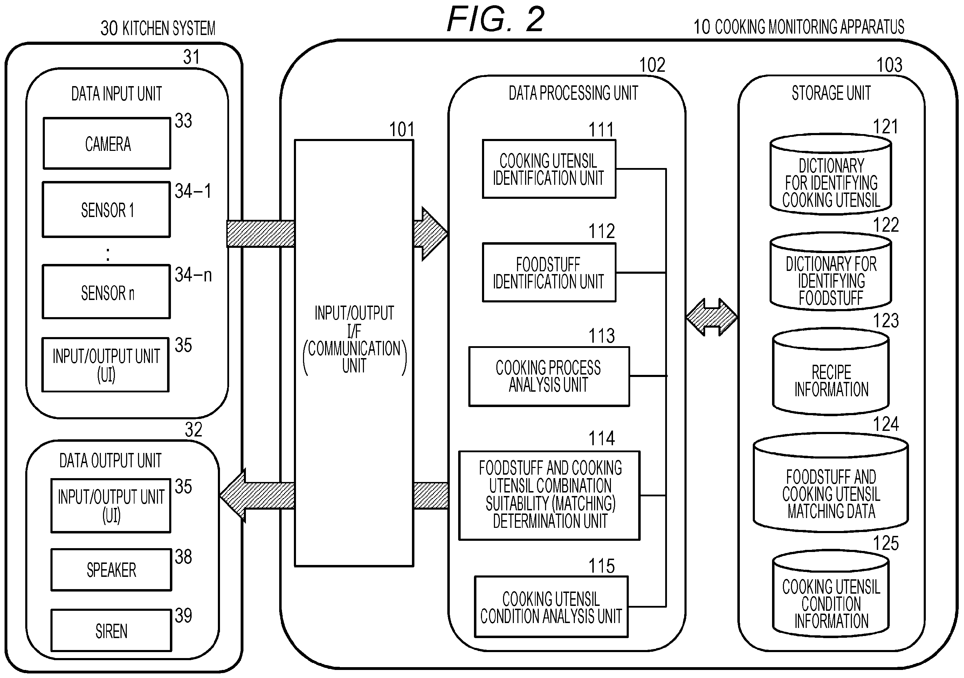

Next, with reference to Fig. 2, a configuration example of the cooking monitoring apparatus 10 which is the information processing apparatus of the present disclosure will be described.

Fig. 2 illustrates the kitchen system 30 on the left side and the cooking monitoring apparatus 10 on the right side.

The kitchen system 30 includes a data input unit 31 and a data output unit 32.

The data input unit 31 includes the camera 33, the sensor 34, and the input/output unit (UI) 35.

The camera 33 captures the image of the state of cooking on the counter, and the captured image is input to the cooking monitoring apparatus 10. In addition, for example, sensor information detected by various sensors 34 such as a temperature sensor, a humidity sensor, an odor sensor, a brightness sensor, and the like is also input to the cooking monitoring apparatus 10.

Also, for example, information input by the user via the touch panel type input/output unit (UI) 35 is also input to the cooking monitoring apparatus 10.

Note that the sensor is also provided in cooking utensils.

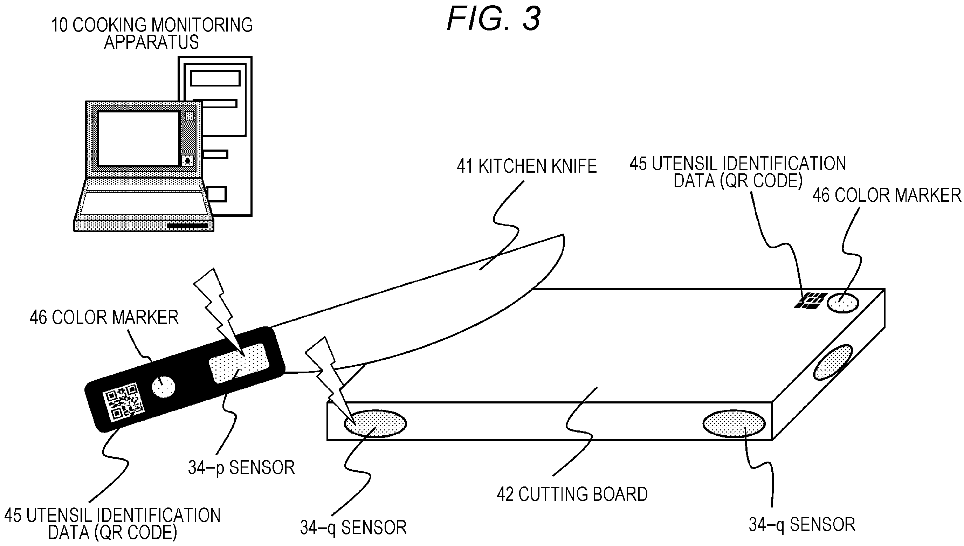

A configuration example of a cooking utensil will be described with reference to Fig. 3. Fig. 3 illustrates a kitchen knife 41 and a cutting board 42 as examples of cooking utensils.

These cooking utensils are also provided with the sensor 34. This sensor has a communication function and directly transmits information detected by the sensor to the cooking monitoring apparatus 10.

Sensors are, for example, sensors such as a gyro sensor, an acceleration sensor, a vibration detection sensor, a position sensor, an inertial measurement unit (IMU), and the like which acquire information such as the movement, trajectory, position of cooking utensils and transmit the information to cooking monitoring apparatus 10.

Also, each of the cooking utensils is equipped with utensil identification data 45, which is the identification data of each cooking utensil. One example is a QR code (registered trademark). Further, each cooking utensil is equipped with a color marker 46 for identifying the cooking utensil and analyzing the movement. By detecting the movement of the color marker 46 from the captured image of the camera 33, it is possible to analyze the position and movement of each cooking utensil.

Returning to Fig. 2, the configuration of the cooking monitoring apparatus 10 will be described.

As illustrated in Fig. 2, the cooking monitoring apparatus 10 includes an input/output I/F (a communication unit) 101, a data processing unit 102, and a storage unit 103.

The data processing unit 102 includes a cooking utensil identification unit 111, a foodstuff identification unit 112, a cooking process analysis unit 113, a foodstuff and cooking utensil combination suitability (matching) determination unit 114, and a cooking utensil condition analysis unit 115.

Also, the storage unit 103 has a dictionary for identifying cooking utensil 121, a dictionary for identifying foodstuff 122, recipe information 123, foodstuff and cooking utensil matching data 124, and cooking utensil condition information 125.

Note that a configuration that the stored data of the storage unit 103 is partially or wholly acquired from an external server via the communication unit is also possible.

For example, recipe information and the like can be acquired from an external server that provides recipe information.

The cooking utensil identification unit 111 of the data processing unit 102 identifies the cooking utensil that is in use and will be used by the user 20 of the kitchen system 30 by using the captured image of the camera 33 of the kitchen system 30 and the acquired information of the sensor 34.

This identification process is performed with reference to data registered in the dictionary for identifying cooking utensil 121 of the storage unit 103.

Image data of each cooking utensil, code data corresponding to the utensil identification data (the QR code (registered trademark)), and the like are registered in the dictionary for identifying cooking utensil 121, and the cooking utensil identification unit 111 collates these registered data with the captured image of the camera 33 of the kitchen system 30 and the acquired information of the sensor 34 to identify the equipment to be used.

The identified used utensil information is output to the foodstuff and cooking utensil combination suitability (matching) determination unit 114.

Further, the foodstuff identification unit 112 of the data processing unit 102 uses the captured image of the camera 33 of the kitchen system 30 and the acquired information of the sensor 34 to identify the foodstuff that the user 20 of the kitchen system 30 is cooking or is about to cook.

This identification process is performed with reference to data registered in the dictionary for identifying foodstuff 122 of the storage unit 103.

Image data, feature information (color, shape, odor, and the like), and the like of each foodstuff are registered in the dictionary for identifying foodstuff 122, and the foodstuff identification unit 112 collates these registered data with the captured image of the camera 33 of the kitchen system 30 and the acquired information of the sensor 34 to identify the foodstuff to be cooked.

The identified foodstuff information is output to the foodstuff and cooking utensil combination suitability (matching) determination unit 114.

The cooking process analysis unit 113 acquires a recipe from the recipe information 123 of the storage unit 103 on the basis of a name of a dish to be cooked input by the user 20 via the input/output unit (UI) 35 of the kitchen system 30 and acquires and analyzes a cooking process of the dish to be cooked by the user 20.

Further, the current cooking process is analyzed using the information input from the camera 33, the sensor 34, and the like.

For example, in a case where the dishes are curry and raw vegetable salad, as the cooking process, a cooking process of curry such as cutting meat, cutting vegetables (carrots, potatoes, onions, and the like), frying and simmering the meat and vegetables, and the like and a cooking process of salad such as cutting raw vegetables such as lettuce, tomato, and the like are analyzed.

Further, the current cooking process is analyzed using the information input from the camera 33, the sensor 34, and the like.

This cooking process analysis information is output to the foodstuff and cooking utensil combination suitability (matching) determination unit 114.

The foodstuff and cooking utensil combination suitability (matching) determination unit 114 inputs each of the following data.
From the cooking utensil identification unit 111: Information regarding a cooking utensil that is being used and scheduled to be used
From the foodstuff identification unit 112: Information regarding a foodstuff that is being cooked and scheduled to be cooked
From the cooking process analysis unit 113: Cooking process analysis information

On the basis of the input information, the foodstuff and cooking utensil combination suitability (matching) determination unit 114 determines whether or not the combination of the foodstuff to be cooked by the user 20 and the cooking utensil to be used for the cooking is suitable, that is, whether or not the foodstuff and the cooking utensil match.

In a case where it is determined that the combination of the foodstuff to be cooked by the user 20 and the cooking utensil to be used for the cooking is not suitable, that is, the foodstuff and the cooking utensil do not match, by using at least one of the input/output unit (UI) 35, speaker 38, or siren 39 that construct the data output unit 32 of the kitchen system 30 via the input/output I/F 101, an alert (a warning) is output, and it is caused to stop using the cooking utensil.

The foodstuff and cooking utensil combination suitability (matching) determination unit 114 refers to the foodstuff and cooking utensil matching data 124 and the cooking utensil condition information 125 stored in the storage unit 103 when determining whether or not the combination of the foodstuff to be cooked by the user 20 and the cooking utensil to be used for the cooking is suitable, that is, whether or not the foodstuff and the cooking utensil match.

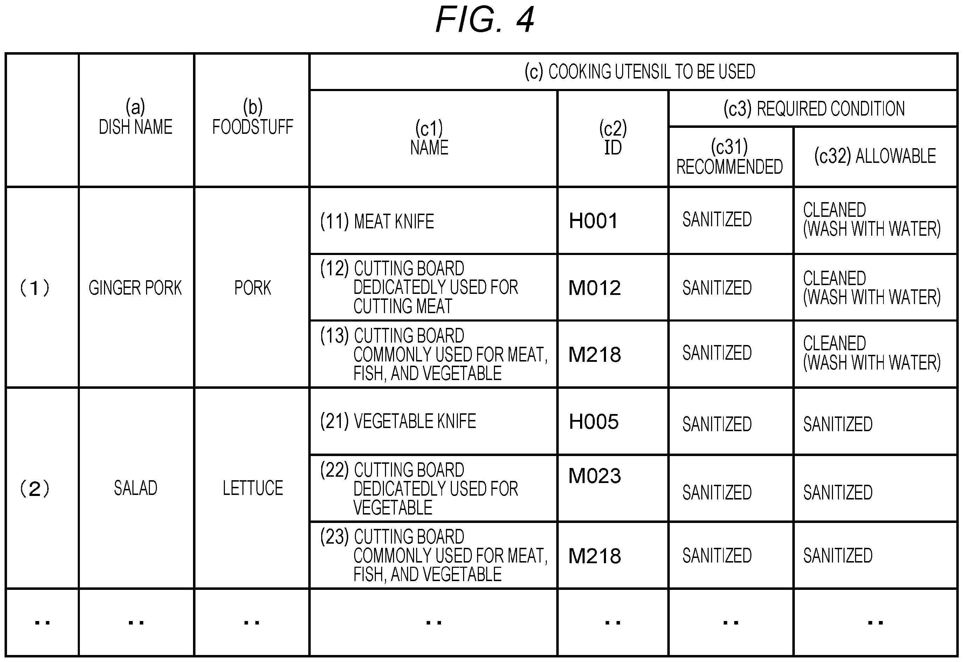

A specific example of the foodstuff and cooking utensil matching data 124 will be described with reference to Fig. 4.

Fig. 4 illustrates an example of a part of recorded data of the foodstuff and cooking utensil matching data 124.

As illustrated in Fig. 4, each of the following data is recorded in the foodstuff and cooking utensil matching data 124.
(a) Dish name
(b) Foodstuff
(c) Cooking utensil to be used

In the foodstuff and cooking utensil matching data 124, corresponding data of each of the data is recorded.

Further, as (c) Cooking utensil to be used:
(c1) Cooking utensil name
(c2) Cooking utensil ID
(c3) Required cooking utensil condition

These are recorded.

Further, as (c3) Required cooking utensil condition:
(c31) Recommended condition
(c32) Allowable condition

This condition information is recorded.

For example, in a case where the user 20 illustrated in Fig. 1 puts meat for ginger pork on a cutting board and selects one kitchen knife from the cooking utensil storage unit 40 to hold in his/her hand, an example of processing to be executed by the foodstuff and cooking utensil combination suitability (matching) determination unit 114 will be described.

In this case, the foodstuff and cooking utensil combination suitability (matching) determination unit 114 inputs each of the following data.

From the cooking utensil identification unit 111, an identifier (ID) of the kitchen knife taken out from the cooking utensil storage unit 40 and an identifier (ID) of the cutting board placed on the counter are input as the cooking utensil information to be used.

From the foodstuff identification unit 112, "pork" is input as the foodstuff information scheduled to be cooked.

From the cooking process analysis unit 113, "pork cutting process" in cooking ginger pork is input as cooking process analysis information.

The foodstuff and cooking utensil combination suitability (matching) determination unit 114 collates this input information with data registered in the foodstuff and cooking utensil matching data 124 illustrated in Fig. 4.

The foodstuff and cooking utensil combination suitability (matching) determination unit 114 first determines that the current cooking process is the "pork cutting process" in cooking ginger pork, on the basis of the cooking process analysis information input from the cooking process analysis unit 113.

Further, it is determined that "pork" is on the cutting board as the foodstuff information input from the foodstuff identification unit 112.

Next, in the foodstuff and cooking utensil matching data 124 illustrated in Fig. 4:
Dish = Ginger pork
Foodstuff = Pork

It is determined whether or not the identifier (ID) of the kitchen knife and the identifier (ID) of the cutting board input from the cooking utensil identification unit 111 are recorded in these entries.

For example, in a case where the identifier (ID) of the kitchen knife input from the cooking utensil identification unit 111 is "H001" and further the identifier (ID) of the cutting board is "M012" or "M218":
Dish = Ginger pork
Foodstuff = Pork

It is determined that these cooking utensils can be used in these cooking processes.

On the other hand, for example, in a case where the identifier (ID) of the kitchen knife input from the cooking utensil identification unit 111 is other than "H001", or the identifier (ID) of the cutting board is other than "M012" or "M218":
Dish = Ginger pork
Foodstuff = Pork

It is determined that the cooking utensils about to be used by the user 20 cannot be used in these cooking processes. In a case where this determination is made, an alert is output.

That is, an alert is output by using at least one of the input/output unit (UI) 35, the speaker 38, or the siren 39 of the data output unit 32 of the kitchen system 30, and it is caused to stop using the cooking utensil.

Note that, in a case where the identifier (ID) of the kitchen knife input from the cooking utensil identification unit 111 is "H001" and further the identifier (ID) of the cutting board is "M012" or "M218":
Dish = Ginger pork
Foodstuff = Pork

It is determined that these cooking utensils can be used in these cooking processes. In this case, the foodstuff and cooking utensil combination suitability (matching) determination unit 114 further checks the conditions of these cooking utensils scheduled to be used by the user.

In the foodstuff and cooking utensil matching data 124 illustrated in Fig. 4, in a case where using a kitchen knife with a kitchen knife identifier (ID) = "H001" to cut pork for ginger pork,
as (c3) Required condition:
(c31) Recommended condition = sanitized
(c32) Allowable condition = cleaned (wash with water)

Each of the information is registered

The foodstuff and cooking utensil combination suitability (matching) determination unit 114,
in order to check the current condition of the kitchen knife with the kitchen knife identifier (ID) = "H001", refers to the cooking utensil condition information 125 stored in the storage unit 103.

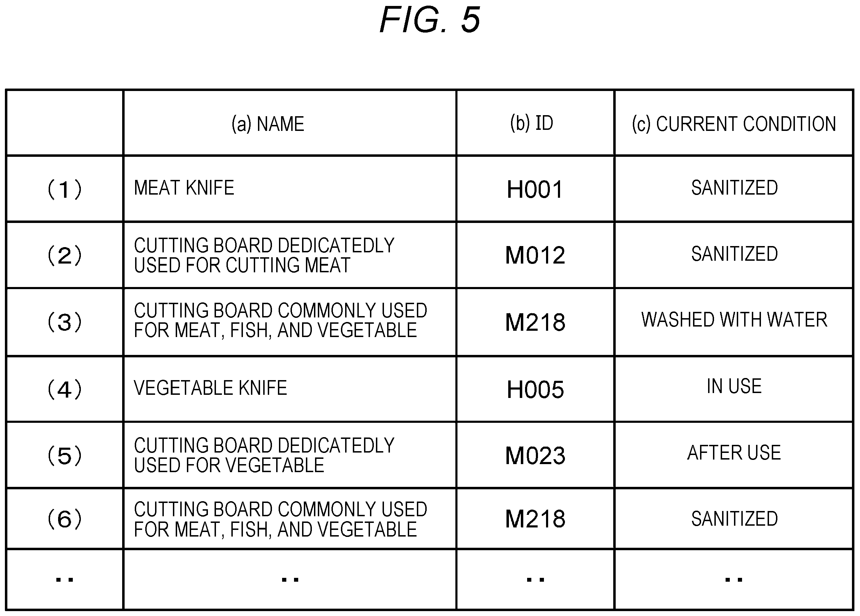

An example of recorded data of the cooking utensil condition information 125 stored in the storage unit 103 is illustrated in Fig. 5.

In the cooking utensil condition information 125, as illustrated in Fig. 5, for each cooking utensil:
(a) Cooking utensil name
(b) Cooking utensil ID
(c) Current condition

Each of the data is recorded being associated with.

For example:
(a) Cooking utensil name = meat knife
(b) Cooking utensil ID = H001

The (c) current condition of this cooking utensil is "sanitized".

In the foodstuff and cooking utensil matching data 124 illustrated in Fig. 4, In a case where using a kitchen knife with a kitchen knife identifier (ID) = "H001" to cut pork for ginger pork, as (c3) Required condition:
(c31) Recommended condition = sanitized
(c32) Allowable condition = cleaned (wash with water)

Each of the information is registered

On the other hand, in the cooking utensil condition information 125 illustrated in Fig. 5, "sanitized" is registered as the current condition of the kitchen knife with the kitchen knife identifier (ID) = "H001".

On the basis of this recorded information, the foodstuff and cooking utensil combination suitability (matching) determination unit 114 determines that the kitchen knife with the kitchen knife identifier (ID) = "H001" can be used.

For the cutting board as the other cooking utensil also, (c3) required condition ((c31) recommended condition or (c32) allowable condition) in the foodstuff and cooking utensil matching data 124 illustrated in Fig.4 is compared with (c) current condition recorded in the cooking utensil condition information 125 illustrated in Fig. 5, and in case of corresponding, it is determined that the cutting board can also be used, and an alert is not output.

However, for example, for any of the cooking utensils scheduled to be used by the user, which is input from the cooking utensil identification unit 111:
(c3) Required condition in the foodstuff and cooking utensil matching data 124 illustrated in Fig. 4
(c) Current condition recorded in the cooking utensil condition information 125 illustrated in Fig. 5

In a case where these conditions do not correspond, it is determined that the cooking utensil is not suitable and an alert output is executed.

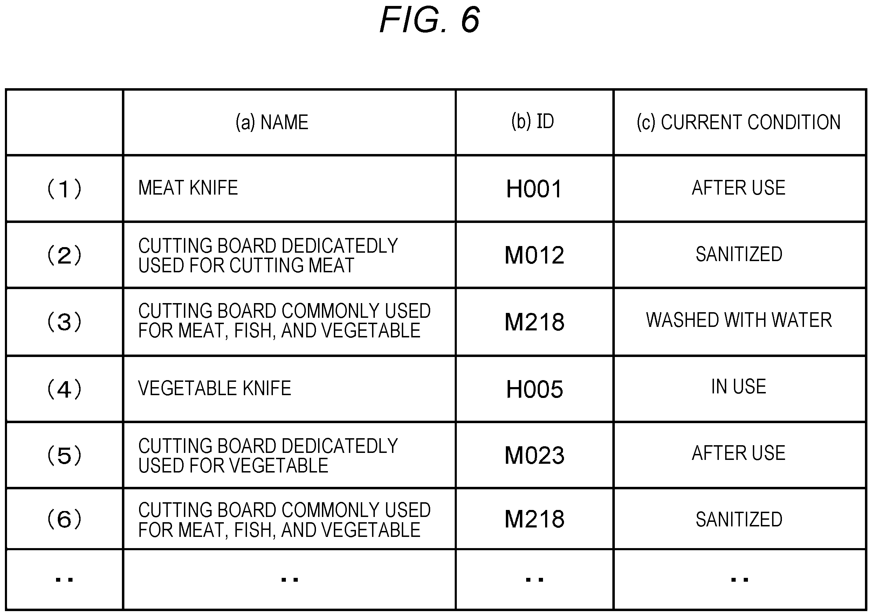

Specifically, an example is, as the cooking utensil condition information 125, in a case where the cooking utensil condition information 125 as illustrated in Fig. 6 is recorded.

In the foodstuff and cooking utensil matching data 124 illustrated in Fig. 4, In a case where using a kitchen knife with a kitchen knife identifier (ID) = "H001" to cut pork for ginger pork, as (c3) Required condition:
(c31) Recommended condition = sanitized
(c32) Allowable condition = cleaned (wash with water)

Each of the information is registered

On the other hand, in the cooking utensil condition information 125 illustrated in Fig. 6, "after use" is registered as the current condition of the kitchen knife with the kitchen knife identifier (ID) = "H001".

"After use" is a condition in which having not been sanitized or washed with water after being used for cooking other foodstuffs.

On the basis of this recorded information, the foodstuff and cooking utensil combination suitability (matching) determination unit 114 determines that the kitchen knife with the kitchen knife identifier (ID) = "H001" cannot be used, and outputs an alert (a warning) to the user 20.

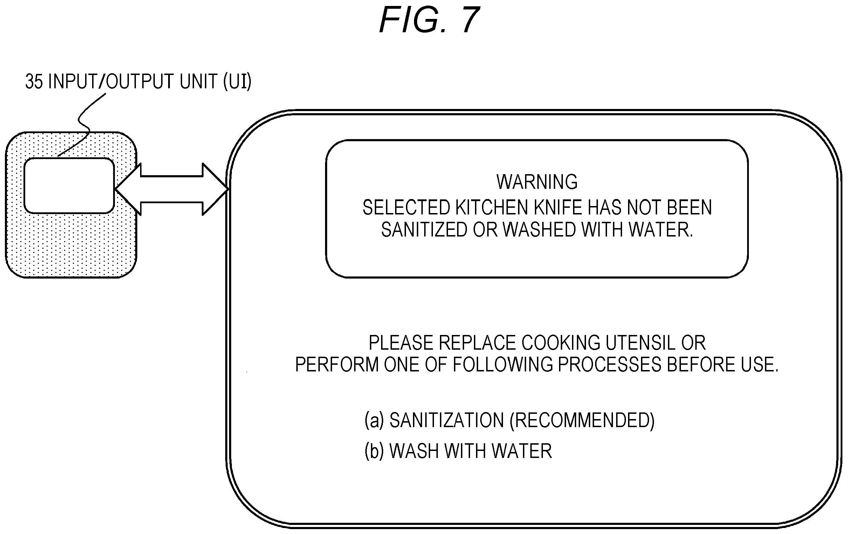

An example of an alert (a warning) output, in this case, is illustrated in Fig. 7.

The example illustrated in Fig. 7 is an example of a warning message displayed on the input/output unit (UI) 35 of the kitchen system 30.

As illustrated in Fig. 7, the following message is displayed.

WARNING = The selected kitchen knife has not been sanitized or washed with water.

Please replace the cooking utensil or perform one of the following processes before use:
(a) Sanitization (recommended)
(b) Wash with water

The user 20 recognizes that the kitchen knife that he/she is currently holding cannot be used by this warning display and performs replacement, sanitization, or washing with water of the kitchen knife according to the warning.

Note that, the process of sanitization or washing with water of the kitchen knife by the user 20 is imaged by the camera 33 and input to the cooking utensil condition analysis unit 115 of the data processing unit 102, and the cooking utensil condition analysis unit 115 updates the registration data of the cooking utensil condition information 125 in the storage unit 103 and changes the current condition of the kitchen knife to sanitized or washed with water.

The cooking utensil condition analysis unit 115 acquires the cooking utensil identification information identified by the cooking utensil identification unit 111 and updates the current condition data recorded in the cooking utensil condition information 125 related to the cooking utensil.

As described above, the cooking monitoring apparatus 10 of the present disclosure determines whether or not all of the cooking utensils about to be used by the user are currently allowed to be used for cooking the foodstuff about to be cooked, and in a case where not being allowed, an alert is output to cause the user to perform processing such as replacement, sanitization, washing with water, or the like. With this configuration, it is possible to prevent the risk of, for example, bacteria of meat or fish adhering to vegetables for raw consumption.

### [2. Regarding a sequence of processing executed by the cooking monitoring apparatus in the configuration in which a person performs cooking]

Next, a sequence of processing executed by the cooking monitoring apparatus 10 in the configuration in which a person performs cooking will be described.

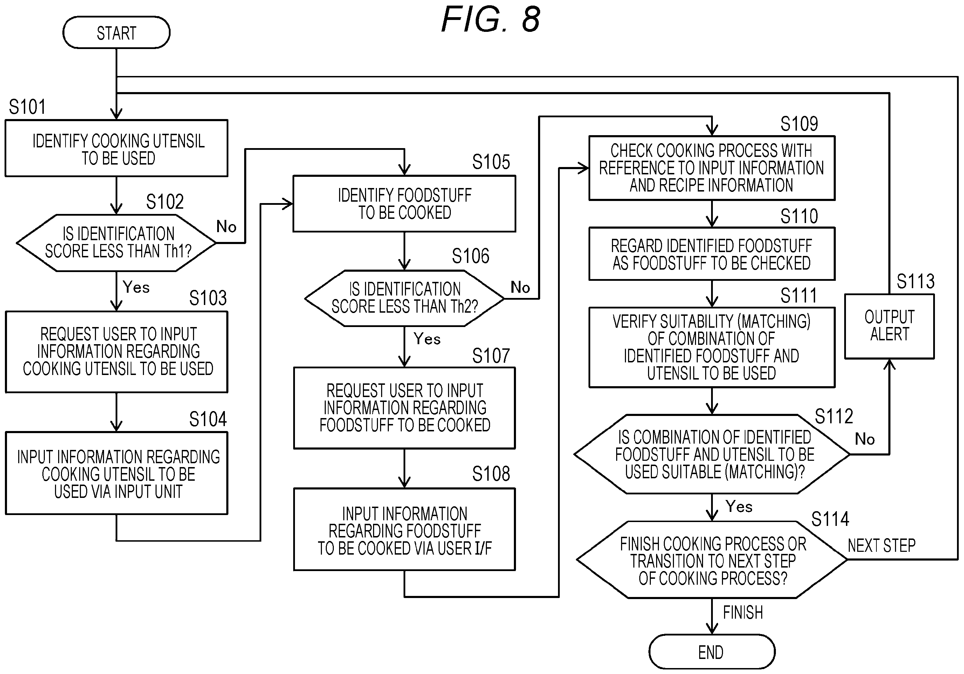

Fig. 8 is a diagram illustrating a flowchart for explaining the processing sequence.

Note that the processing according to the flowchart illustrated in Fig. 8 can be executed according to the program stored in the storage unit of the cooking monitoring apparatus 10 that is the information processing apparatus of the present disclosure, and it is possible to perform the processing as a program execution process by a processor, for example, such as a central processing unit (CPU) and the like having a program execution function.

The processing of each step of the flow illustrated in Fig. 8 will be described below.

### (Step S101)

First, in step S101, the identification process of the cooking utensil that is used is executed.

The process of steps S101 to S104 is a process executed by the cooking utensil identification unit 111.

The cooking utensil identification unit 111 identifies the cooking utensil that the user 20 of the kitchen system 30 is using and schedules to use by using the captured image of the camera 33 of the kitchen system 30 and the acquired information of the sensor 34.

This identification process is performed with reference to data registered in the dictionary for identifying cooking utensil 121 of the storage unit 103. Image data of each cooking utensil, code data corresponding to the utensil identification data (the QR code (registered trademark)), and the like are registered in the dictionary for identifying cooking utensil 121, and the cooking utensil identification unit 111 collates these registered data with the captured image of the camera 33 of the kitchen system 30 and the acquired information of the sensor 34 to identify the equipment to be used.

Note that the cooking utensil identification unit 111 determines in real time whether or not the target utensil is in use by analyzing a spatial position trajectory of the utensil determined from, for example, the IMU device with the communication function that is the cooking sensor 34 provided in the utensil and the captured image of the color marker.

In the case of the IMU, since it is possible to know the acceleration and attitude angular acceleration at each time, it is possible to estimate the spatial position and attitude at each time by integrating those parameters.

Also, in the identification process of the cooking utensil, for example, it is possible to apply the following processes.
(A-1) A binary discrimination learning process that uses locus time series data of the cooking utensil in use and locus time series data of the cooking utensil not in use as learning samples
(A-2) From the locus time series data described above, a process of determining whether or not being in use by performing threshold processing whether or not space coordinates are within the countertop area and a velocity component is equal to or more than a certain level
(B) A detection process that uses detection information of the sensor that detects that a person holds the cooking utensil

### (Step S102)

Next, in step S102, the cooking utensil identification unit 111 compares the identification score, which is the identification result of the cooking utensil to be used executed in step S101, with a predetermined threshold value (Th1).

The identification score is a score indicating the reliability of the identification result by the cooking utensil identification unit 111.

When executing the identification of the cooking utensil, the cooking utensil identification unit 111 generates the identification result and the score indicating the reliability of the identification result together.

In a case where the identification score is less than the predetermined threshold value (Th1), that is:
Identification score < Th1

In a case where the formula described above is satisfied, it is determined that the reliability of the identification result by the cooking utensil identification unit 111 is low, and the process proceeds to step S103.

In a case where the formula described above is satisfied, it is determined that the reliability of the identification result by the cooking utensil identification unit 111 is high, steps S103 to S104 are omitted, and the process proceeds to step S105.

### (Steps S103 to S104)

In step S102:
Identification score < Th1

In a case where it is determined that the formula described above is satisfied, it is determined that the reliability of the identification result by the cooking utensil identification unit 111 is low, and the process proceeds to step S103.

In step S103, the cooking utensil identification unit 111 requests the user to input information regarding the cooking utensil to be used.

For example, the cooking utensil list is presented on the input/output unit (UI) 35 (which is the touch panel) illustrated in Fig. 1, and the user is asked to select the cooking utensil to be used.

In step S104, this information input by the user is acquired, and the cooking utensil to be used is specified.

Note that it is also possible to perform the request to the user for inputting the information regarding the cooking utensil to be used and the input by the user by using voice data. That is, it is also possible to make an input request by the voice output from the speaker 38, input the user's utterance via the microphone (the sensor 34), and perform voice analysis.

In steps S101 to S104, the information regarding the cooking utensil to be used identified by the cooking utensil identification unit 111 is output to the foodstuff and cooking utensil combination suitability (matching) determination unit 114.

### (Step S105)

Next, in step S105, the identification process of the foodstuff to be cooked is executed.

The process of steps S105 to S108 is a process executed by the foodstuff identification unit 112.

The foodstuff identification unit 112 identifies the foodstuff to be cooked by the user 20 of the kitchen system 30 by using the captured image of the camera 33 and the acquired information of the sensor 34 of the kitchen system 30.

This identification process is performed with reference to data registered in the dictionary for identifying foodstuff 122 of the storage unit 103.

Image data, feature information (color, shape, odor, and the like), and the like of each foodstuff are registered in the dictionary for identifying foodstuff 122, and the foodstuff identification unit 112 collates these registered data with the captured image of the camera 33 of the kitchen system 30 and the acquired information of the sensor 34 to identify the foodstuff to be cooked.

Note that, regarding the same foodstuff also, it is preferable to perform identification regarding the state, for example, whether it is in the state of a lump of meat, in the middle of cutting, or in the state after cutting. In order to perform this identification, it is required to perform learning in advance. Basically, it is possible to perform such identification by preparing an image sample for learning for each state and performing multi-class discrimination learning using machine learning technologies such as deep learning, support vector machine, and the like. Also, it is possible to improve the identification performance by executing a hierarchical identification process such as identifying the state of the foodstuff after identifying the foodstuff.

The foodstuff information identified by the foodstuff identification unit 112 is output to the foodstuff and cooking utensil combination suitability (matching) determination unit 114.

### (Step S106)

Next, in step S106, the foodstuff identification unit 112 compares the identification score, which is the identification result of the foodstuff executed in step S105, with a predetermined threshold value (Th2).

The identification score is a score indicating the reliability of the identification result by the foodstuff identification unit 112.

When executing the identification of the foodstuff, the foodstuff identification unit 112 generates the identification result and the score indicating the reliability of the identification result together.

In a case where the identification score is less than the predetermined threshold value (Th2), that is:
Identification score < Th2

In a case where the formula described above is satisfied, it is determined that the reliability of the identification result by the foodstuff identification unit 112 is low, and the process proceeds to step S107.

In a case where the formula described above is satisfied, it is determined that the reliability of the identification result by the foodstuff identification unit 112 is high, steps S107 to S108 are omitted, and the process proceeds to step S109.

### (Steps S107 to S108)

In step S106:
Identification score < Th2

In a case where it is determined that the formula described above is satisfied, it is determined that the reliability of the identification result by the foodstuff identification unit 112 is low, and the process proceeds to step S107.

In step S107, the foodstuff identification unit 112 requests the user to input information regarding the foodstuff to be cooked.

For example, the foodstuff list is presented to the touch panel type input/output unit (UI) 35 shown in Fig. 1, and the user is asked to select the foodstuff to be cooked.

In step S108, this information input by the user is acquired, and the foodstuff to be cooked is specified.

Note that it is also possible to perform the request to the user for inputting the information and the input by the user by using voice data. That is, it is also possible to make an input request by the voice output from the speaker 38, input the user's utterance via the microphone (the sensor 34), and perform voice analysis.

In steps S105 to S108, the information regarding the foodstuff to be cooked identified by the foodstuff identification unit 112 is output to the foodstuff and cooking utensil combination suitability (matching) determination unit 114.

### (Step S109)

Next, in step S109, the cooking process is checked with reference to the input information of the camera 33, the sensor 34, and the like, the recipe information, and the like.

This process is a process executed by the cooking process analysis unit 113.

The cooking process analysis unit 113 acquires a recipe from the recipe information 123 of the storage unit 103 on the basis of the cooking schedule input by the user 20 via the input/output unit (the touch panel) 35 of the kitchen system 30, and the user 20 acquires and analyzes the cooking process of the dish to be cooked.

Further, the current cooking process is analyzed using the information input from the camera 33, the sensor 34, and the like.

The process of checking which cooking process is currently performed is done by collating the foodstuff and the state of the foodstuff identified in steps S105 to S108 with a cooking progress table recorded in recipe data acquired from the recipe information 123 of the storage unit 103 and the foodstuff to be used and the state data in each process.

For example, the following data are recorded in the recipe information 123 of the storage unit 103.
Recipe ID: 1234
Dish name: Ginger pork
Cooking process:
   Step 1: Foodstuff = Pork, Quantity = 200 g
Cooking method = Cut with a kitchen knife
Target condition of foodstuff: Easy-to-eat size (longitudinal size 5 cm)
Process 2: Foodstuff = Lettuce
Cooking method = Cut with a kitchen knife
Target condition of foodstuff: shredded
Process 3: Foodstuffs = Ginger, Amount = 1 piece (10 g)
Cooking method = Cut with a kitchen knife
Target condition of foodstuff: Chopped
. . .

Note that the initial state before starting cooking is the state before the start of "step 1" described above.

For example, if the foodstuff to be cooked currently placed on the counter of the kitchen system 30 is "pork" and the state is "already cut to a size that is easy to eat", it is determined that "step 1" has just finished by collating with the recipe data described above.

Before starting each step, in the following step S110, "determination of matching between the foodstuff to be cooked and the utensil to be used" is executed.

### (Step S110)

The process of following steps S110 to S113 is a process executed by the foodstuff and cooking utensil combination suitability (matching) determination unit 114.

The foodstuff and cooking utensil combination suitability (matching) determination unit 114 determines whether or not the combination of the foodstuff to be cooked by the user 20 and the cooking utensil to be used for the cooking is suitable, that is, whether or not the foodstuff and the cooking utensil match. Specifically, it is determined whether or not there is a hygiene problem. In a case where it is determined that there is a hygiene problem, an alert is output.

First, in step S110, the foodstuff to be checked is identified.

### (Steps S111 to S113)

Next, in step S111, the foodstuff and cooking utensil combination suitability (matching) determination unit 114 determines whether or not the combination of the foodstuff to be checked and the utensil to be used for cooking this foodstuff is suitable, that is, whether or not the foodstuff and the utensil match. Specifically, it is determined whether or not there is a hygiene problem.

The foodstuff and cooking utensil combination suitability (matching) determination unit 114 inputs each of the following data.

From the cooking utensil identification unit 111: Information regarding a cooking utensil that is being used and scheduled to be used

From the foodstuff identification unit 112: Information regarding a foodstuff that is being cooked and scheduled to be cooked

From the cooking process analysis unit 113: Cooking process analysis information

On the basis of the input information, the foodstuff and cooking utensil combination suitability (matching) determination unit 114 determines whether or not the combination of the foodstuff to be cooked by the user 20 and the cooking utensil to be used for the cooking is suitable, that is, whether or not the foodstuff and the cooking utensil match.

As described above, the foodstuff and cooking utensil combination suitability (matching) determination unit 114 refers to the foodstuff and cooking utensil matching data 124 and the cooking utensil condition information 125 stored in the storage unit 103 when determining whether or not the combination of the foodstuff to be cooked by the user 20 and the cooking utensil to be used for the cooking is suitable, that is, whether or not the foodstuff and the cooking utensil match.

In the foodstuff and cooking utensil matching data 124, as explained earlier with reference to Fig. 4:
(a) Dish name
(b) Foodstuff
(c) Cooking utensil to be used

These corresponding data are recorded. Further, as (c) Cooking utensil to be used:
(c1) Cooking utensil name
(c2) Cooking utensil ID
(c3) Required cooking utensil condition

These data are recorded. Further, as (c3) Required condition of cooking utensil:
(c31) Recommended condition
(c32) Allowable condition

The condition information is recorded.

On the other hand, in the cooking utensil condition information 125, as described earlier with reference to Fig. 5, for each cooking utensil:
(a) Cooking utensil name
(b) Cooking utensil ID
(c) Current condition

Each of these data is recorded being associated with.

In a case where
(c3) Required condition of the foodstuff and cooking utensil matching data 124 illustrated in Fig. 4 and
(c) Current condition recorded in the cooking utensil condition information 125 illustrated in Fig. 5
   do not correspond, the foodstuff and cooking utensil combination suitability (matching) determination unit 114 determines that the cooking utensil is not suitable (step S112 = No), an alert output is executed in step S113, it is caused to stop using the cooking utensil, and the process returns to step S101.

On the other hand, in a case where these conditions correspond, it is determined that the cooking utensil is suitable (step S112 = Yes), and the process proceeds to step S114.

Note that, in a case where a plurality of foodstuffs to be checked is detected in step S110, the process of steps S111 to S113 is executed sequentially or in parallel for all the foodstuffs.

### (Step S114)

In a case where it is determined in step S112 that the cooking utensil for the foodstuff is suitable (step S112 = Yes), the process proceeds to step S114.

In a case where the process proceeds to step S114, it is in a condition that cooking with the cooking utensil selected by the user 20 is performed.

In step S114, it is determined whether the cooking process is finished or the cooking process transitions to the next step by the cooking of the user 20.

This process is executed by the cooking process analysis unit 113.

In a case where it is determined that the cooking process transitions to the next step, the process returns to step S101, and the similar processing is repeated for the next step.

On the other hand, in a case where it is determined that the cooking process has been finished by the cooking of the user, the processing is finished.

By performing the processing according to this flow, for the foodstuff to be cooked, a suitable cooking utensil that does not have a hygienic problem is to be selected and used.

That is, the cooking monitoring apparatus 10 of the present disclosure verifies whether the cooking utensil to be used by the user is suitable for each foodstuff, that is, there is no hygiene problem, and in a case where there is a problem, the cooking monitoring apparatus 10 outputs the alert, and causes the user to perform the processing such as replacement, sanitization, washing with water, or the like. With this configuration, it is possible to prevent the risk of, for example, bacteria of meat or fish adhering to vegetables for raw consumption.

### [3. Regarding a configuration and processing of the cooking monitoring apparatus in a configuration in which a cooking robot performs cooking]

As described earlier, the information processing apparatus (the cooking monitoring apparatus) of the present disclosure can be used in the following two configurations.
(Configuration example 1) A configuration in which a person performs cooking
(Configuration example 2) A configuration in which a cooking robot performs cooking

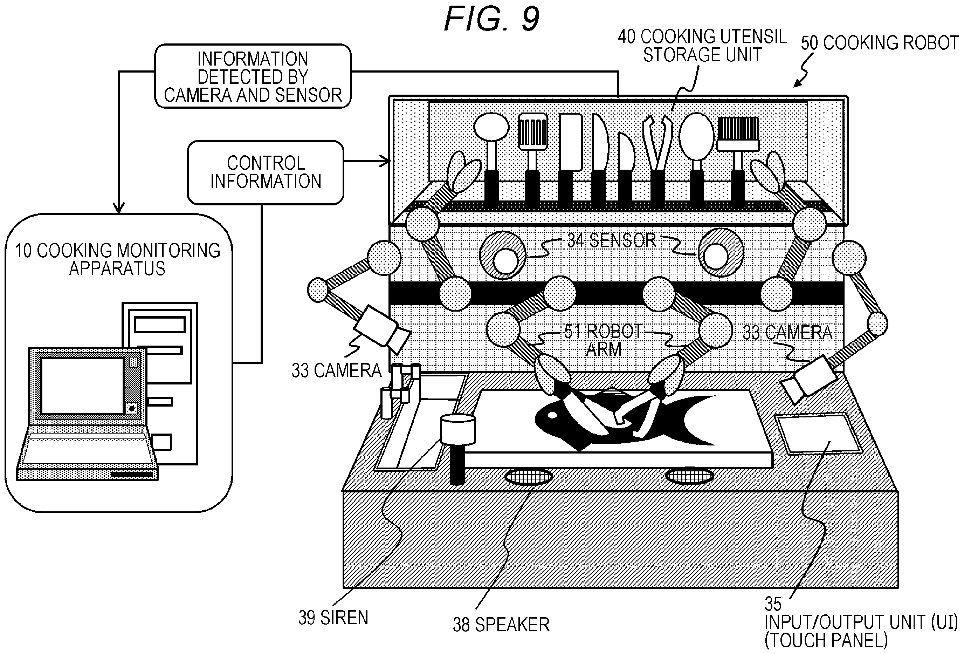

Hereinafter, the configuration and processing of the cooking monitoring apparatus in the configuration in which the cooking robot performs cooking will be described with reference to Fig. 9 and below.

Fig. 9 illustrates the cooking monitoring apparatus 10 that is the information processing apparatus of the present disclosure and a cooking robot 50.

The cooking robot 50 includes a robot arm 51, and the robot arm 51 operates instead of a person to perform cooking.

In a case where the cooking monitoring apparatus 10 detects a possibility for the cooking robot 50 to use a cooking utensil having a hygienic problem, the cooking monitoring apparatus 10 generates control information (a command) to cause replacement, sanitization, and cleaning of the cooking utensil to be performed to output the control information to the cooking robot 50.

The cooking robot 50 performs replacement, sanitization, and cleaning of the cooking utensil according to this control information.

Note that, while Fig. 9 illustrates the cooking monitoring apparatus 10 and the cooking robot 50 as separate configurations, it is also possible to configure these as to be integrated. In that case, the generation and output of the control information (the command) for causing the replacement, sanitization, and cleaning of the cooking utensil to be performed are omitted, and it is determined whether or not it is required to replace, sanitize, and clean the cooking utensil in one apparatus, and then, the replacement, sanitization, and cleaning of the cooking utensil are performed under the determination.

The cooking robot 50 is provided with a cooking utensil storage unit 40, and various cooking utensils are stored. For example, various cooking utensils such as meat knives, vegetable knives, small knives, bowls, cutting boards for meat, cutting boards for vegetables, and the like are stored.

The cooking robot 50 can freely select the utensil to use from these cooking utensils by using the robot arm 51.

A camera 33 is provided on the cooking robot 50 to capture an image of a state of cooking on the counter, and the captured image is input to the cooking monitoring apparatus 10. Also, for example, various sensors 34 such as a temperature sensor, a humidity sensor, an odor sensor, a brightness sensor, a voice sensor (a microphone), and the like are provided, and information from these sensors is also input to the cooking monitoring apparatus 10.

Also, the cooking robot 50 is provided with, for example, a touch panel type input/output unit (UI) 35, and the cooking robot 50 can input various information to the cooking monitoring apparatus 10 via the input/output unit (UI) 35.

The cooking monitoring apparatus 10 analyzes information regarding foodstuff to be cooked by the cooking robot 50 and information regarding cooking utensil to be used from this information detected by the camera 33 and the sensor 34, information input by the cooking robot 50 via the input/output unit (UI) 35, and the like and determines whether or not a combination of the foodstuff and the cooking utensil is a suitable combination, that is, whether or not the foodstuff and the cooking utensil match, and in a case where it is determined that the combination of the foodstuff and the cooking utensil is not a suitable combination, control information (a command) for causing stop of using the cooking utensil and causing replacement, sanitization, and cleaning of the cooking utensil to be performed is generated to be output to the cooking robot 50.

Note that, for example, in a case where a person is monitoring the operation of the cooking robot 50, and the like, a configuration that an alert is output is also possible similarly as in the case that the person performs cooking described earlier. In response to this alert, the observer can monitor whether or not the cooking robot 50 correctly performs replacement, sanitization, and cleaning of the cooking utensil.

The alert is output using the input/output unit (UI) 35, the speaker 38, the siren 39, and the like of the cooking robot 50 illustrated in the drawings.

When inputting the control information (the command) for causing the replacement, sanitization, and cleaning of the cooking utensil to be performed from the cooking monitoring apparatus 10, the cooking robot 50 performs processing such as replacing, sanitizing, washing the cooking utensil with water, or the like. This processing prevents unsanitary cooking, for example, such as cutting vegetables for a raw vegetable salad with a kitchen knife used for cutting raw meat, and it is possible to perform hygienic cooking.

In this example also, one of the important processes of the cooking monitoring apparatus 10 is a process of determining whether or not the combination of the foodstuff to be cooked by the cooking robot 50 and the cooking utensil is a suitable combination, that is, whether or not the foodstuff and the cooking utensil match.

Specifically, in a case where trying to cut vegetables without performing sanitization after cutting meat with a meat knife, it is determined that the combination of the cooking foodstuff and the cooking utensil is not a suitable combination, that is, the cooking foodstuff and the cooking utensil do not match, the control information (the command) for causing stop of using the cooking utensil and causing replacement, sanitization, and cleaning of the cooking utensil to be performed is generated to be output to the cooking robot 50. Further, an alert is output if required.

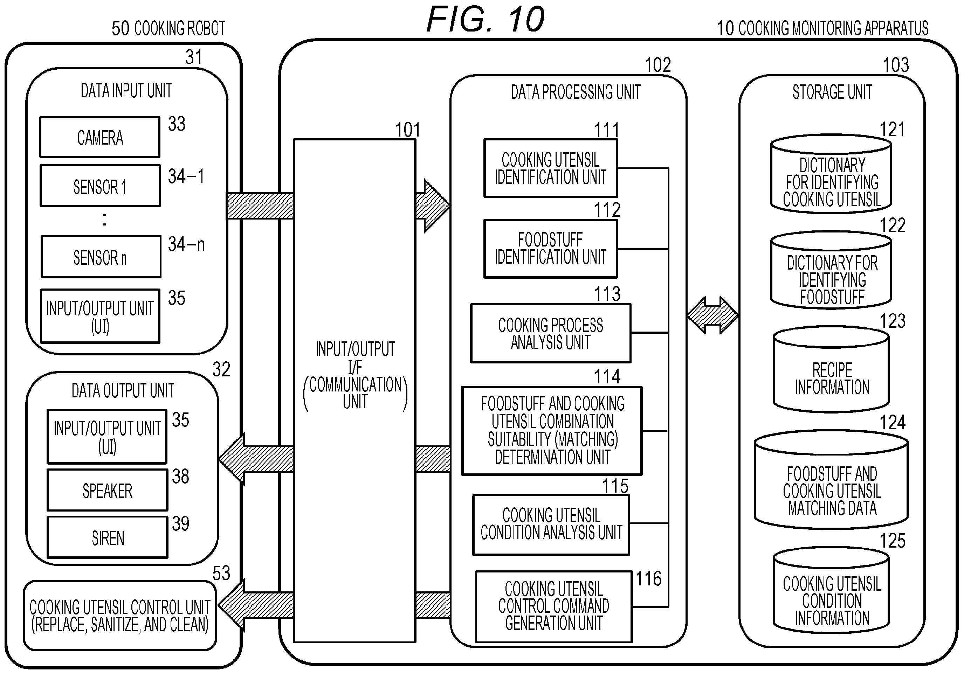

Next, a configuration example of the cooking monitoring apparatus 10 which is the information processing apparatus of the present disclosure in the present embodiment will be described with reference to Fig. 10.

Fig. 10 illustrates the cooking robot 50 on the left side and the cooking monitoring apparatus 10 on the right side.

The cooking robot 50 includes a data input unit 31, a data output unit 32, and a cooking utensil control unit 53.

The data input unit 31 includes the camera 33, the sensor 34, and the input/output unit (UI) 35.

The data output unit 32 includes an input/output unit (UI) 35, a speaker 38, and a siren 39.

Since these configurations are similar to the configurations described earlier with reference to Fig. 2, the description thereof will be omitted.

The cooking utensil control unit 53 executes the replacement, sanitization, and cleaning of the cooking utensil when inputting the control information (the command) for causing the replacement, sanitization, and cleaning of the cooking utensil to be executed from the cooking monitoring apparatus 10. Specific examples of the replacement, sanitization, and cleaning of the cooking utensil will be described later.

The cooking monitoring apparatus 10 includes an input/output I/F (communication unit) 101, a data processing unit 102, and a storage unit 103.

The data processing unit 102 includes a cooking utensil identification unit 111, a foodstuff identification unit 112, a cooking process analysis unit 113, a foodstuff and cooking utensil combination suitability (matching) determination unit 114, a cooking utensil condition analysis unit 115, and a cooking utensil control command generation unit 116.

Also, the storage unit 103 stores a dictionary for identifying cooking utensil 121, a dictionary for identifying foodstuff 122, recipe information 123, foodstuff and cooking utensil matching data 124, and cooking utensil condition information 125.

Note that a configuration that the stored data of the storage unit 103 is partially or wholly acquired from an external server via the communication unit is also possible.

For example, recipe information and the like can be acquired from an external server that provides recipe information.

Configurations of the cooking utensil identification unit 111, the foodstuff identification unit 112, the cooking process analysis unit 113, the foodstuff and cooking utensil combination suitability (matching) determination unit 114, and the cooking utensil condition analysis unit 115 of the data processing unit 102 and configurations of the dictionary for identifying cooking utensil 121, the dictionary for identifying foodstuff 122, the recipe information 123, the foodstuff and cooking utensil matching data 124, and the cooking utensil condition information 125 of the storage unit 103 are similar to the configurations described earlier with reference to Fig. 2. Therefore, the description thereof will be omitted.

The cooking utensil control command generation unit 116 of the data processing unit 102 does not exist in the configuration described earlier with reference to Fig. 2 and is a configuration peculiar to this embodiment.

The cooking utensil control command generation unit 116 generates control information (a command) for causing replacement, sanitization, and cleaning of the cooking utensil to be executed and outputs the control information (the command) to the cooking robot 50 via the input/output I/F 101.

That is, in the foodstuff and cooking utensil combination suitability (matching) determination unit 114, in a case where it is determined that the combination of the foodstuff to be cooked by the cooking robot 50 and the cooking utensil to be used for the cooking is not suitable, that is, the foodstuff and the cooking utensil do not match, the control information (the command) for causing replacement, sanitization, and cleaning of the cooking utensil to be performed is generated to be output to the cooking robot 50.

Note that, an alert is also output if required. Whether or not to output the alert can be set by the user.

The control information (the command) generated by the cooking utensil control command generation unit 116 is input to the cooking utensil control unit 53 of the cooking robot 50. The cooking utensil control unit 53 of the cooking robot 50 executes the replacement, sanitization, and cleaning of the cooking utensil when inputting the control information (the command) for causing the replacement, sanitization, and cleaning of the cooking utensil to be executed from the cooking monitoring apparatus 10.

The cooking monitoring apparatus 10 of the present embodiment determines whether or not all the cooking utensils scheduled to be used by the cooking robot 50 is currently allowable for being used for cooking the foodstuff to be cooked, and in a case where not being allowable, the cooking monitoring apparatus 10 generates and outputs the control information (the command) for causing replacement, sanitization, and cleaning of the cooking utensil to be performed to cause the cooking robot 50.to perform processing such as replacement, sanitization, washing with water of the cooking utensil, and the like. With this configuration, it is possible to prevent the risk of, for example, bacteria of meat or fish adhering to vegetables for raw consumption.

### [4. Regarding a sequence of processing executed by the cooking monitoring apparatus in the configuration in which the cooking robot performs cooking]

Next, the sequence of processing executed by the cooking monitoring apparatus 10 in the configuration in which the cooking robot 50 performs cooking will be described.

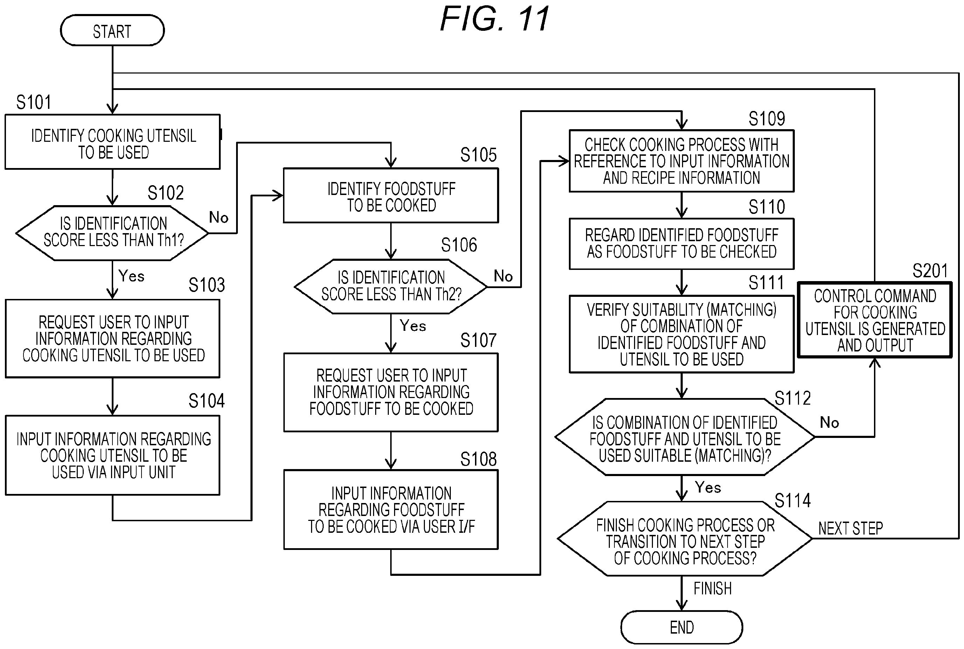

Fig. 11 is a diagram illustrating a flowchart for explaining the processing sequence.

Note that the processing according to the flowchart illustrated in Fig. 11 can be executed according to the program stored in the storage unit of the cooking monitoring apparatus 10 that is the information processing apparatus of the present disclosure, and it is possible to perform the processing as a program execution process by a processor, for example, such as the CPU and the like having a program execution function.

The flowchart illustrated in Fig. 11 is almost similar to the flow illustrated in Fig. 8 described earlier.

The difference is that the "output alert" in step S113 illustrated in Fig. 8 is changed to "control command for cooking utensil is generated and output" in step S201.

Since the processing of the other steps is similar to the processing of the steps in the flow illustrated in Fig. 8 described earlier, the description thereof will be omitted, and the processing of step S201 that is the difference will be mainly described.

Step S201 is executed in a case where determining as No in the determination process of step S112.

The processing from step S111 will be described first.

### (Steps S111 to S112)

The next processing of steps S111 to S112 is the processing executed by the foodstuff and cooking utensil combination suitability (matching) determination unit 114.

In step S111, the foodstuff and cooking utensil combination suitability (matching) determination unit 114 determines whether or not the combination of the foodstuff to be checked and the utensil to be used for cooking this foodstuff is suitable, that is, whether or not the foodstuff and the utensil match. Specifically, it is determined whether or not there is a hygiene problem.

The foodstuff and cooking utensil combination suitability (matching) determination unit 114 inputs each of the following data.
From the cooking utensil identification unit 111: Information regarding a cooking utensil that is being used and scheduled to be used
From the foodstuff identification unit 112: Information regarding a foodstuff that is being cooked and scheduled to be cooked
From the cooking process analysis unit 113: Cooking process analysis information

On the basis of the input information, the foodstuff and cooking utensil combination suitability (matching) determination unit 114 determines whether or not the combination of the foodstuff to be cooked by the cooking robot 50 and the cooking utensil to be used for the cooking is suitable, that is, whether or not the foodstuff and the cooking utensil match.

As described above, the foodstuff and cooking utensil combination suitability (matching) determination unit 114 refers to the foodstuff and cooking utensil matching data 124 and the cooking utensil condition information 125 stored in the storage unit 103 when determining whether or not the combination of the foodstuff to be cooked by the cooking robot 50 and the cooking utensil to be used for the cooking is suitable, that is, whether or not the foodstuff and the cooking utensil match.

In the foodstuff and cooking utensil matching data 124, as explained earlier with reference to Fig. 4:
(a) Dish name
(b) Foodstuff
(c) Cooking utensil to be used

These corresponding data are recorded. Further, as (c) Cooking utensil to be used:
(c1) Cooking utensil name
(c2) Cooking utensil ID
(c3) Required cooking utensil condition

These data are recorded. Further, as (c3) Required condition of cooking utensil:
(c31) Recommended condition
(c32) Allowable condition

The condition information is recorded.

On the other hand, in the cooking utensil condition information 125, as described earlier with reference to Fig. 5, for each cooking utensil:
(a) Cooking utensil name
(b) Cooking utensil ID
(c) Current condition

Each of these data is recorded being associated with.

In a case where
(c3) Required condition of the foodstuff and cooking utensil matching data 124 illustrated in Fig. 4 and
(c) Current condition recorded in the cooking utensil condition information 125 illustrated in Fig. 5
   do not correspond, the foodstuff and cooking utensil combination suitability (matching) determination unit 114 determines that the cooking utensil is not suitable (step S112 = No).

When this determination process is executed, the process proceeds to step S201.

On the other hand, in a case where these conditions correspond, it is determined that the cooking utensil is suitable (step S112 = Yes), and the process proceeds to step S114.

Note that, in a case where a plurality of foodstuffs to be checked is detected in step S110, the process of steps S111 to S112 is executed sequentially or in parallel for all the foodstuffs.

### (Step S201)

Step S201 is the processing to be executed in a case where, in step S112, the foodstuff and cooking utensil combination suitability (matching) determination unit 114 concluded that the combination of the foodstuff to be cooked by the cooking robot 50 and the cooking utensil is not suitable, that is, that is, the foodstuff and the cooking utensil do not match and there is a hygienic problem.

In this case, in step S201, the cooking utensil control command generation unit 116 generates the control information (the command) for causing stop of using the cooking utensil and causing replacement, sanitization, and cleaning of the cooking utensil to be executed, to output the control information to the cooking robot 50 via the input/output I/F 101.

Note that, an alert is also output if required. Whether or not to output the alert can be set by the user.

The control information (the command) generated by the cooking utensil control command generation unit 116 is input to the cooking utensil control unit 53 of the cooking robot 50. The cooking utensil control unit 53 of the cooking robot 50 executes the replacement, sanitization, and cleaning of the cooking utensil when inputting the control information (the command) for causing the replacement, sanitization, and cleaning of the cooking utensil to be executed from the cooking monitoring apparatus 10.

### (Step S114)

In a case where it is determined in step S112 that the cooking utensil for the foodstuff is suitable (step S112 = Yes), the process proceeds to step S114.

In a case where the process proceeds to step S114, it is in a condition that cooking with the cooking utensil selected by the cooking robot 50 is performed.

In step S114, it is determined whether the cooking process is finished or the cooking process transitions to the next step by the cooking of the cooking robot 50.

This process is executed by the cooking process analysis unit 113.

In a case where it is determined that the cooking process transitions to the next step, the process returns to step S101, and the similar processing is repeated for the next step.

On the other hand, in a case where it is determined that the cooking process has been finished by the cooking of the cooking robot 50, the processing is finished.

By performing the processing according to this flow, even in a case where the cooking robot 50 performs cooking, for the foodstuff to be cooked, a suitable cooking utensil that does not have a hygienic problem is to be selected and used.

That is, the cooking monitoring apparatus 10 of the present disclosure verifies whether the cooking utensil to be used by the cooking robot 50 is suitable for each foodstuff, that is, there is no hygiene problem, and in a case where there is a problem, the cooking monitoring apparatus 10 outputs the alert and causes the cooking robot 50 to perform the processing such as replacement, sanitization, washing with water, or the like. With this configuration, it is possible to prevent the risk of, for example, bacteria of meat or fish adhering to vegetables for raw consumption.

### [5. Regarding a configuration example for performing replacement, sanitization, and cleaning of a cooking utensil]

Next, a configuration example for performing replacement, sanitization, and cleaning of a cooking utensil will be described.

In the configuration in which the cooking robot 50 performs cooking with reference to Fig. 9 and below described earlier, it is required for the cooking robot 50 itself to operate the robot arm 51 to perform the replacement, sanitization, and cleaning of the cooking utensils.

A configuration example of a cooking utensil for realizing this processing will be described below.

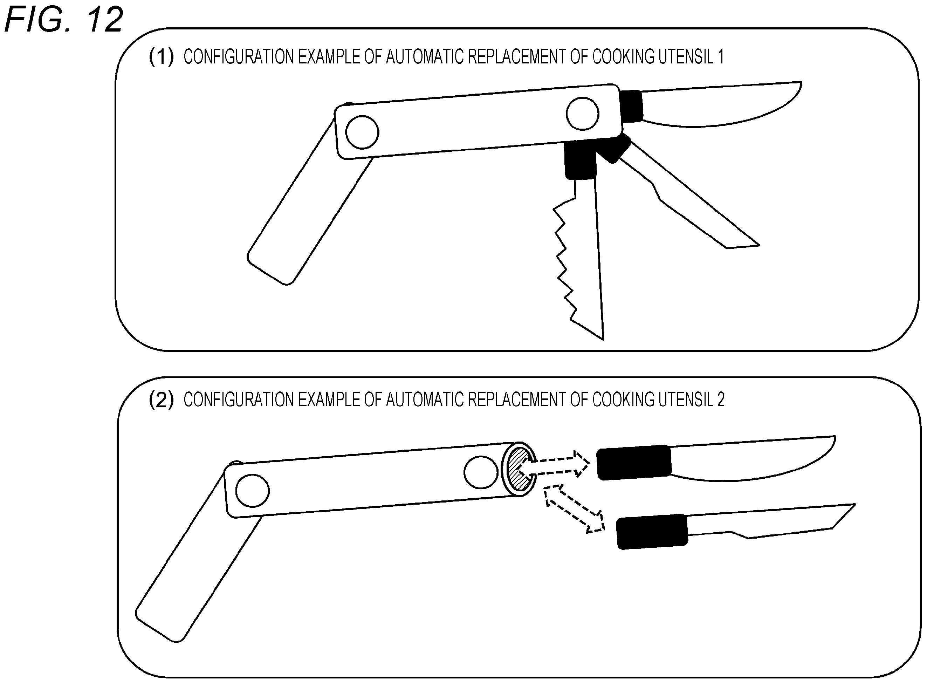

Fig. 12 is a diagram illustrating a configuration example that enables an automatic replacement of a cooking utensil.
(1) Configuration example of automatic replacement of cooking utensil 1 is a cooking utensil having a so-called survival knife-like mechanism. This is the mechanism that the utensil not to be used is folded and stored in the main body of the utensil, and only the utensil to be used is exposed as a workable condition.
(2) Configuration example of automatic replacement of cooking utensil 2 is a cooking utensil having an attachment mechanism. By pulling the utensil not to be used applying force in a certain direction, it is possible to remove the utensil from the main body.

It is possible to attach the utensil to be used to the main body by applying force in the opposite direction.

It is possible to realize these configurations by various fixing mechanisms such as a magnet, a suction, a screw, and the like for attachment and detachment.

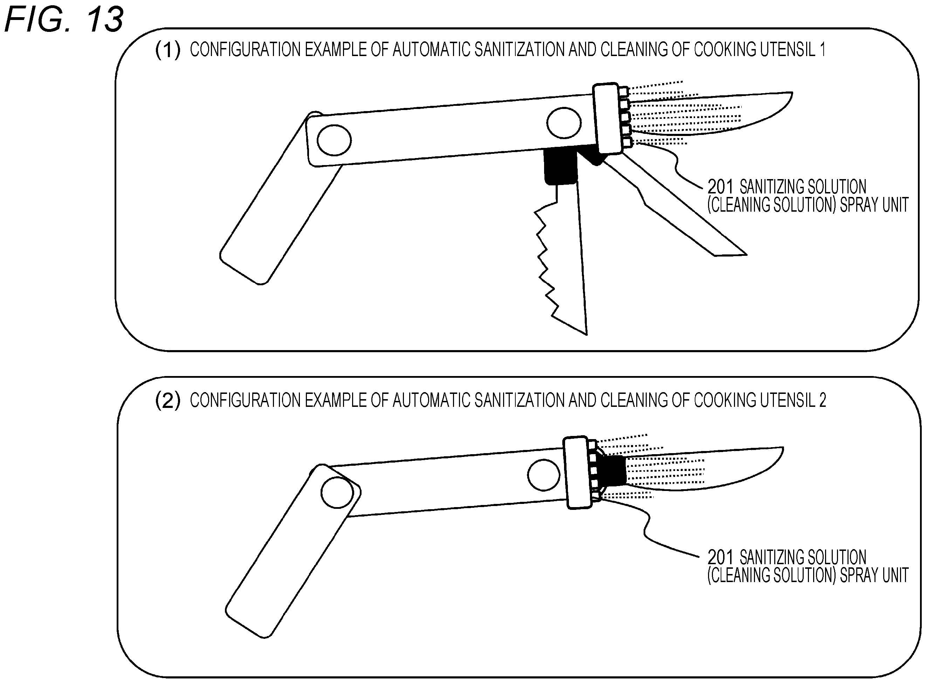

Next, a configuration example that enables the cooking robot 50 to perform sanitization and cleaning of a cooking utensil will be described with reference to Fig. 13 and below.

Fig. 13 illustrates a configuration in which a cooking utensil is provided with a sanitizing solution (or cleaning solution, boiling water, or the like) spray unit 201. In this configuration, the main body of the cooking utensil is provided with a solution spraying mechanism, and it is possible to spray the sanitizing solution or cleaning solution over the entire part of the cooking utensil that comes into contact with a foodstuff, for example, just like a mechanism for spraying window washer fluid on a front window of a car.

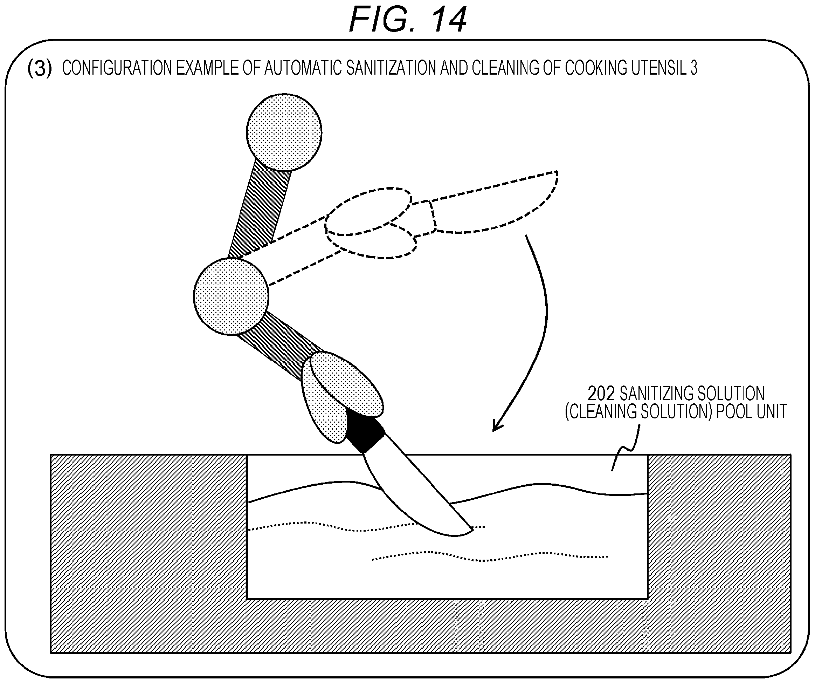

Fig. 14 illustrates a configuration in which immersing a cooking utensil in a sanitizing solution (or cleaning solution, boiling water, or the like) pool unit 202. By controlling the robot arm 51 to which the cooking utensil is attached, the cooking utensil is immersed in the sanitizing solution (or cleaning solution) pool unit 202.

Note that a configuration in which discharging sanitizing solution or the like from a faucet and pouring the discharged solution on the cooking utensil is also possible.

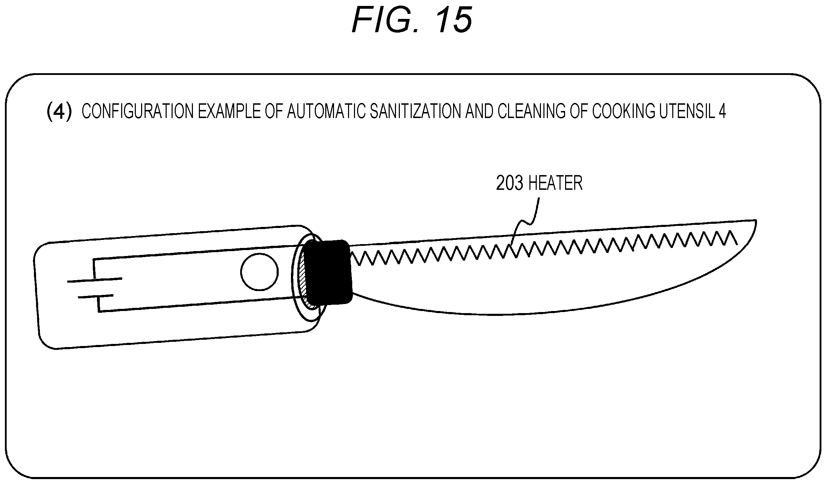

Fig. 15 illustrates a configuration in which a heater 203 is attached to a cooking utensil. By supplying electric power to the heater 203, the portion of contacting foodstuffs of the cooking utensil is heated to a high temperature and sanitized.

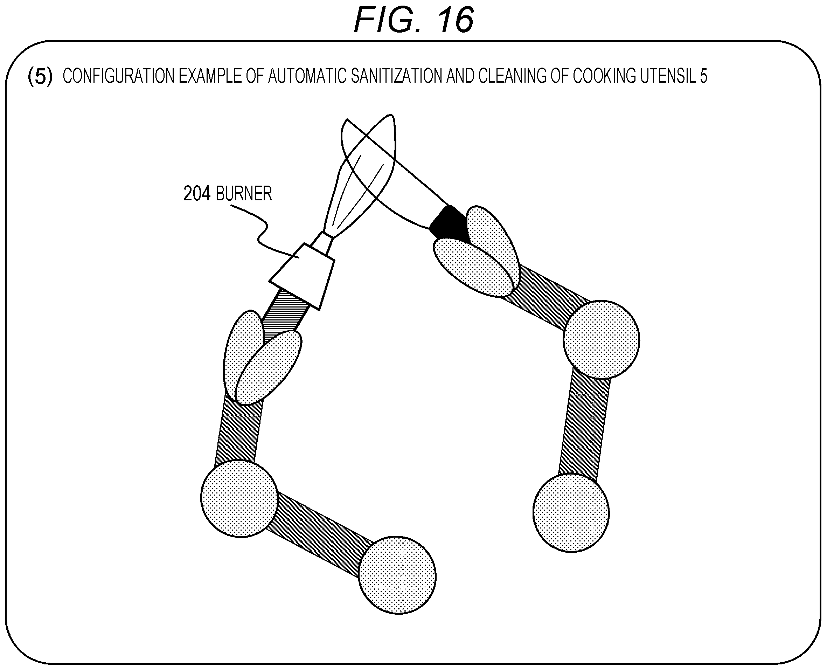

Fig. 16 illustrates a configuration in which a flame output from a burner 204 is applied to the portion of contacting foodstuffs of the cooking utensil. By this treatment, the portion of contacting foodstuffs of the cooking utensil is heated to a high temperature and sanitized.

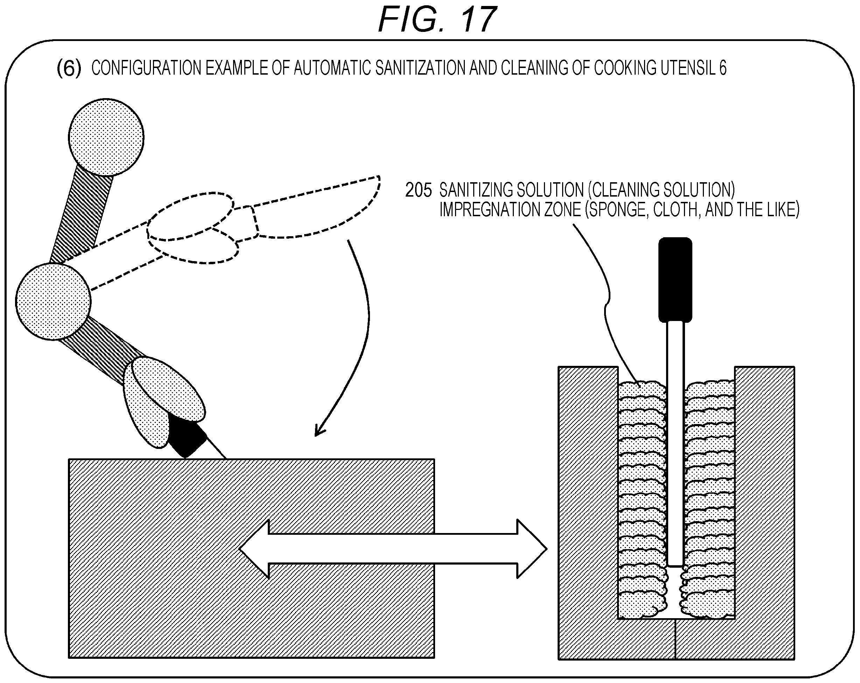

Fig. 17 illustrates a configuration in which the cooking utensil is brought into contact with a sanitizing solution (or cleaning solution, boiling water, or the like) impregnation zone 205 and moved. The robot arm 51 to which the cooking utensil is attached is controlled, and the cooking utensil is slid through the area sandwiched between the sanitizing solution (or cleaning solution) impregnation zones 205. The sanitizing solution (or cleaning solution, boiling water, or the like) impregnation zone 205 is constructed of, for example, a sponge, a cloth, and the like.

### [6. Regarding a hardware configuration example of information processing apparatus]

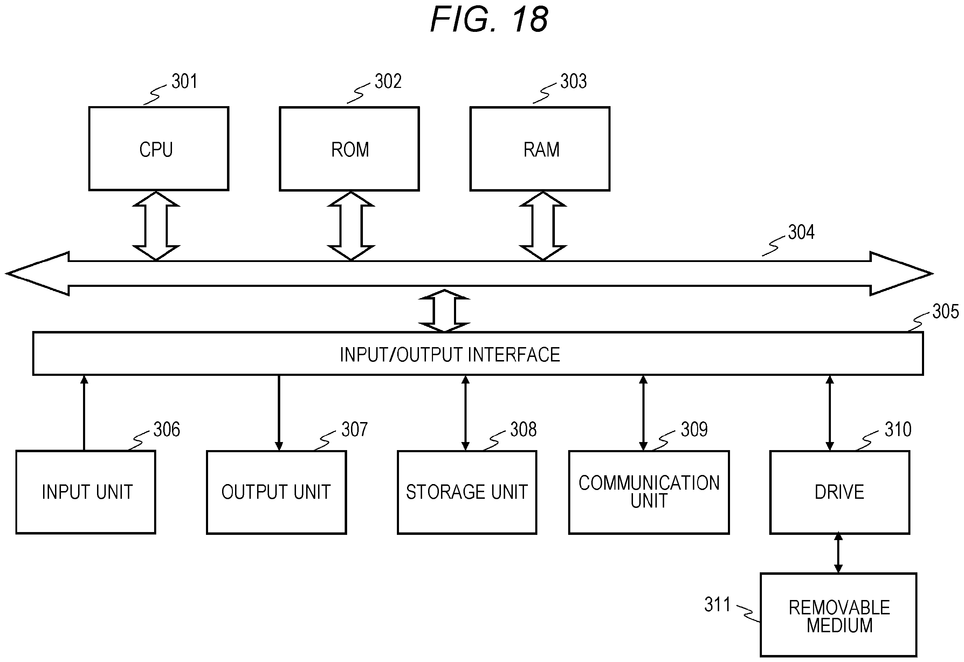

Next, a hardware configuration example of the information processing apparatus constituting the cooking monitoring apparatus 10 of the present disclosure will be described with reference to Fig. 18.

The hardware to be described with reference to Fig. 18 is an example of the hardware configuration of the information processing apparatus constituting the cooking monitoring apparatus 10 described earlier with reference to Fig. 6.

A CPU 301 functions as a control unit and a data processing unit that executes various processing according to a program stored in a read-only memory (ROM) 302 or a storage unit 308. For example, the processing according to the sequence described in the above embodiment is executed. A random-access memory (RAM) 303 stores a program executed by the CPU 301, data, and the like. The CPU 301, ROM 302, and RAM 303 are connected to each other by a bus 304.

The CPU 301 is connected to an input/output interface 305 via the bus 304, and the input/output interface 305 is connected to an input unit 306 including various switches, a keyboard, a mouse, a microphone, a sensor, and the like, and an output unit 307 including a display, a speaker, and the like.

The input unit 306 and the output unit 307 are also used for inputting/outputting data and a command from/to the kitchen system and the cooking robot.

The CPU 301 executes various processing in response to a command input from the input unit 306 and outputs a processing result to, for example, the output unit 307.

The storage unit 308 connected to the input/output interface 305 is constructed of, for example, a hard disk and the like, and stores a program executed by the CPU 301 and various data. The communication unit 309 functions as a transmission/reception unit for Wi-Fi communication, Bluetooth (registered trademark) (BT) communication, and other data communication via a network such as the Internet, a local area network, or the like, and communicates with an external device.

A drive 310 connected to the input/output interface 305 drives a removable medium 311 such as a magnetic disk, an optical disk, a magneto-optical disk, or a semiconductor memory such as a memory card and the like, and records or reads data.

### [7. Summary of configurations of the present disclosure]

As described above, the embodiments of the present disclosure have been described in detail with reference to the specific embodiments. However, it is self-evident that one of ordinary skill in the art can modify or substitute the embodiments without departing from the gist of the present disclosure. That is, the present invention has been disclosed in the form of an example, and should not be construed in a limited manner. In order to judge the gist of this disclosure, the section of claims should be taken into consideration.

Note that the technology disclosed in the present specification can have the following configurations.
(1) An information processing apparatus including
   a suitability determination unit that verifies correspondence between a foodstuff to be cooked and a cooking utensil to be used for cooking and determines whether or not the cooking utensil has a hygiene problem, in which
   the suitability determination unit, in a case where determining that the cooking utensil has the hygiene problem, executes a warning output or control of causing stop of using the cooking utensil.
(2) The information processing apparatus according to (1), in which
   the suitability determination unit outputs a warning by display information or voice information to a user who is a cooking performer.
(3) The information processing apparatus according to (1), in which
   the suitability determination unit outputs control information for causing replacement or cleaning of the cooking utensil to be performed to a cooking robot which is a cooking performer.
(4) The information processing apparatus according to any one of (1) to (3), further including
   a foodstuff identification unit that identifies the foodstuff to be cooked, in which
   the suitability determination unit verifies the correspondence between the foodstuff identified by the foodstuff identification unit and the cooking utensil to be used for cooking the foodstuff and determines whether or not the cooking utensil has the hygienic problem.
(5) The information processing apparatus according to any one of (1) to (4), further including
   a cooking utensil identification unit that identifies the cooking utensil, in which
   the suitability determination unit verifies the correspondence between the cooking utensil identified by the cooking utensil identification unit and the foodstuff to be cooked using the cooking utensil and determines whether or not the cooking utensil has the hygiene problem.
(6) The information processing apparatus according to any one of (1) to (5), further including
   a cooking process analysis unit that analyzes a cooking process, in which
   the suitability determination unit, in units of the cooking process analyzed by the cooking process analysis unit, verifies the correspondence between the foodstuff to be cooked and the cooking utensil to be used for cooking and determines whether or not the cooking utensil has the hygiene problem.
(7) The information processing apparatus according to any one of (1) to (6), in which
   the information processing apparatus analyzes at least one of a captured image by a camera or detected information by a sensor, the camera and the sensor being installed in a kitchen, to identify the foodstuff to be cooked and the cooking utensil to be used for cooking.
(8) The information processing apparatus according to any one of (1) to (7), in which
   the information processing apparatus identifies the cooking utensil being used for cooking on the basis of an output from a sensor placed on the cooking utensil.
(9) The information processing apparatus according to any one of (1) to (8), in which
   the information processing apparatus identifies the cooking utensil being used for cooking on the basis of a captured image including utensil identification data or a color marker placed on the cooking utensil.
(10) The information processing apparatus according to any one of (1) to (9), further including
   a storage unit that stores foodstuff and cooking utensil matching data storing appropriate correspondence data between the foodstuff and the cooking utensil, in which
   the suitability determination unit, with reference to the foodstuff and cooking utensil matching data, verifies the correspondence between the foodstuff and the cooking utensil and determines whether or not the cooking utensil has the hygiene problem.
(11) The information processing apparatus according to any one of (1) to (10), further including
   a storage unit that stores cooking utensil condition information recording a current condition of the cooking utensil, in which
   the suitability determination unit, with reference to the cooking utensil condition information, determines whether or not the cooking utensil has the hygiene problem.
(12) An information processing system including
   a cooking robot that performs cooking, and
   a cooking monitoring apparatus that monitors cooking performed by the cooking robot, in which
   the cooking monitoring apparatus includes
   a suitability determination unit that verifies correspondence between a foodstuff to be cooked by the cooking robot and a cooking utensil to be used for cooking and determines whether or not the cooking utensil has a hygiene problem, and
   the suitability determination unit, in a case where determining that the cooking utensil has the hygiene problem, outputs control information to cause stop of using the cooking utensil to the cooking robot.
(13) The information processing system according to (12), in which
   the suitability determination unit of the cooking monitoring apparatus outputs control information for causing replacement or cleaning of the cooking utensil to be performed to the cooking robot.
(14) The information processing system according to (12) or (13), in which
   the cooking monitoring apparatus further includes
   a foodstuff identification unit that identifies the foodstuff to be cooked, and
   a cooking utensil identification unit that identifies the cooking utensil, and
   the suitability determination unit verifies the correspondence between the foodstuff identified by the foodstuff identification unit and the cooking utensil identified by the cooking utensil identification unit and determines whether or not the cooking utensil has the hygienic problem.
(15) An information processing method executed in an information processing apparatus, in which
   a suitability determination unit executes a suitability determination process of verifying correspondence between a foodstuff to be cooked and a cooking utensil to be used for cooking and determining whether or not the cooking utensil has a hygiene problem, and
   the suitability determination unit, in a case where determining that the cooking utensil has the hygiene problem, executes a warning output or control of causing stop of using the cooking utensil.
(16) An information processing method executed in an information processing system, the information processing system including
   a cooking robot that performs cooking, and
   a cooking monitoring apparatus that monitors cooking performed by the cooking robot, in which
   the cooking monitoring apparatus executes a suitability determination process of verifying correspondence between a foodstuff to be cooked by the cooking robot and a cooking utensil to be used for cooking and determining whether or not the cooking utensil has a hygiene problem, and
   in the suitability determination process, in a case where determining that the cooking utensil has the hygiene problem, control information to cause stop of using the cooking utensil is output to the cooking robot.
(17) A program that causes an information processing apparatus to execute information processing, in which
   the program causes a suitability determination unit to execute a suitability determination process of verifying correspondence between a foodstuff to be cooked and a cooking utensil to be used for cooking and determines whether or not the cooking utensil has a hygiene problem, and
   in the suitability determination process, in a case where determining that the cooking utensil has the hygiene problem, the program causes output of warning or output of control information to cause stop of using the cooking utensil to be executed.

Also, the series of processing described in the specification can be executed by hardware, software, or a composite configuration of both. In a case where executing processing by software, it is possible to install a program that records a processing sequence in a memory in a computer built in dedicated hardware and cause the program to be executed, or install a program on a general-purpose computer that can execute various processing and cause the program to be executed. For example, it is possible to record the program on a recording medium preliminarily. In addition to installing on a computer from a recording medium, it is possible to receive the program via a network such as a local area network (LAN) and the Internet and install the program on a recording medium such as a built-in hard disk and the like.

Note that the various processing described in the specification are not only executed in chronological order according to the description but may also be executed in parallel or individually in accordance with a processing capacity of an apparatus that executes the processing or a need. Also, in the present specification, the system is a logical set configuration of a plurality of apparatuses, and the apparatuses having each configuration are not limited to those in the same housing.

### INDUSTRIAL APPLICABILITY

As described above, according to the configuration of one embodiment of the present disclosure, it is possible to realize a configuration that verifies correspondence between a cooking foodstuff and a cooking utensil and determines whether or not there is a hygiene problem in the cooking utensil to perform a warning output, replacement control of the cooking utensil, or the like.

Specifically, for example, a suitability determination unit that verifies the correspondence between the foodstuff to be cooked and the cooking utensil to be used for cooking and determines whether or not the cooking utensil has a hygienic problem is included. In a case where the suitability determination unit determines that the cooking utensil has a hygiene problem, the suitability determination unit executes a warning output or control of causing stop of using the cooking utensil. The suitability determination unit outputs a warning by display information or voice information to a user who is a cooking performer. Alternatively, control information for causing replacement or cleaning of the cooking utensil to be performed is output to a cooking robot which is a cooking performer.

By the present configuration, it is possible to realize a configuration that verifies correspondence between a cooking foodstuff and a cooking utensil and determines whether or not there is a hygiene problem in the cooking utensil to execute a warning output, replacement control of the cooking utensil, or the like

### REFERENCE SIGNS LIST

10 Cooking monitoring apparatus
20 User
30 Kitchen system
31 Data input unit
32 Data output unit
33 Camera
34 Sensor
35 Input/output unit (UI)
38 Speaker
39 Siren
101 Input/output I/F (communication unit)
102 Data processing unit
103 Storage unit
111 Cooking utensil identification unit
112 Foodstuff identification unit
113 Cooking process analysis unit
114 Foodstuff and cooking utensil combination suitability (matching) determination unit
115 Cooking utensil condition analysis unit
116 Cooking utensil control command generation unit
121 Dictionary for identifying cooking utensil
122 Dictionary for identifying foodstuff
123 Recipe information
124 Foodstuff and cooking utensil matching data
125 Cooking utensil condition information
201 Sanitizing solution spray unit
202 Sanitizing solution pool unit
203 Heater
204 Burner
205 Sanitizing solution impregnation zone
301 CPU
302 ROM
303 RAM
304 Bus
305 Input/output interface
306 Input unit
307 Output unit
308 Storage unit
309 Communication unit
310 Drive
311 Removable medium

## Claims

1. An information processing apparatus comprising
a suitability determination unit that verifies correspondence between a foodstuff to be cooked and a cooking utensil to be used for cooking and determines whether or not the cooking utensil has a hygiene problem, wherein
the suitability determination unit, in a case where determining that the cooking utensil has the hygiene problem, executes a warning output or control of causing stop of using the cooking utensil.

2. The information processing apparatus according to claim 1, wherein
the suitability determination unit outputs a warning by display information or voice information to a user who is a cooking performer.

3. The information processing apparatus according to claim 1, wherein
the suitability determination unit outputs control information for causing replacement or cleaning of the cooking utensil to be performed to a cooking robot which is a cooking performer.

4. The information processing apparatus according to claim 1, further comprising
a foodstuff identification unit that identifies the foodstuff to be cooked, wherein
the suitability determination unit verifies the correspondence between the foodstuff identified by the foodstuff identification unit and the cooking utensil to be used for cooking the foodstuff and determines whether or not the cooking utensil has the hygienic problem.

5. The information processing apparatus according to claim 1, further comprising
a cooking utensil identification unit that identifies the cooking utensil, wherein
the suitability determination unit verifies the correspondence between the cooking utensil identified by the cooking utensil identification unit and the foodstuff to be cooked using the cooking utensil and determines whether or not the cooking utensil has the hygiene problem.

6. The information processing apparatus according to claim 1, further comprising
a cooking process analysis unit that analyzes a cooking process, wherein
the suitability determination unit, in units of the cooking process analyzed by the cooking process analysis unit, verifies the correspondence between the foodstuff to be cooked and the cooking utensil to be used for cooking and determines whether or not the cooking utensil has the hygiene problem.

7. The information processing apparatus according to claim 1, wherein
the information processing apparatus analyzes at least one of a captured image by a camera or detected information by a sensor, the camera and the sensor being installed in a kitchen, to identify the foodstuff to be cooked and the cooking utensil to be used for cooking.

8. The information processing apparatus according to claim 1, wherein
the information processing apparatus identifies the cooking utensil being used for cooking on a basis of an output from a sensor placed on the cooking utensil.

9. The information processing apparatus according to claim 1, wherein
the information processing apparatus identifies the cooking utensil being used for cooking on a basis of a captured image including utensil identification data or a color marker placed on the cooking utensil.

10. The information processing apparatus according to claim 1, further comprising
a storage unit that stores foodstuff and cooking utensil matching data storing appropriate correspondence data between the foodstuff and the cooking utensil, wherein
the suitability determination unit, with reference to the foodstuff and cooking utensil matching data, verifies the correspondence between the foodstuff and the cooking utensil and determines whether or not the cooking utensil has the hygiene problem.

11. The information processing apparatus according to claim 1, further comprising
a storage unit that stores cooking utensil condition information recording a current condition of the cooking utensil, wherein
the suitability determination unit, with reference to the cooking utensil condition information, determines whether or not the cooking utensil has the hygiene problem.

12. An information processing system comprising:
a cooking robot that performs cooking; and
a cooking monitoring apparatus that monitors cooking performed by the cooking robot, wherein
the cooking monitoring apparatus includes
a suitability determination unit that verifies correspondence between a foodstuff to be cooked by the cooking robot and a cooking utensil to be used for cooking and determines whether or not the cooking utensil has a hygiene problem, and
the suitability determination unit, in a case where determining that the cooking utensil has the hygiene problem, outputs control information to cause stop of using the cooking utensil to the cooking robot.

13. The information processing system according to claim 12, wherein
the suitability determination unit of the cooking monitoring apparatus outputs control information for causing replacement or cleaning of the cooking utensil to be performed to the cooking robot.

14. The information processing system according to claim 12, wherein
the cooking monitoring apparatus further includes:
a foodstuff identification unit that identifies the foodstuff to be cooked; and
a cooking utensil identification unit that identifies the cooking utensil, and
the suitability determination unit verifies the correspondence between the foodstuff identified by the foodstuff identification unit and the cooking utensil identified by the cooking utensil identification unit and determines whether or not the cooking utensil has the hygienic problem.

15. An information processing method executed in an information processing apparatus, wherein
a suitability determination unit executes a suitability determination process of verifying correspondence between a foodstuff to be cooked and a cooking utensil to be used for cooking and determining whether or not the cooking utensil has a hygiene problem, and
the suitability determination unit, in a case where determining that the cooking utensil has the hygiene problem, executes a warning output or control of causing stop of using the cooking utensil.

16. An information processing method executed in an information processing system, the information processing system comprising:
a cooking robot that performs cooking, and
a cooking monitoring apparatus that monitors cooking performed by the cooking robot, wherein
the cooking monitoring apparatus executes a suitability determination process of verifying correspondence between a foodstuff to be cooked by the cooking robot and a cooking utensil to be used for cooking and determining whether or not the cooking utensil has a hygiene problem, and
in the suitability determination process, in a case where determining that the cooking utensil has the hygiene problem, control information to cause stop of using the cooking utensil is output to the cooking robot.

17. A program that causes an information processing apparatus to execute information processing, wherein
the program causes a suitability determination unit to execute a suitability determination process of verifying correspondence between a foodstuff to be cooked and a cooking utensil to be used for cooking and determining whether or not the cooking utensil has a hygiene problem, and
in the suitability determination process, in a case where determining that the cooking utensil has the hygiene problem, the program causes output of warning or output of control information to cause stop of using the cooking utensil to be executed.
